(19) Europäisches Patentamt
European Patent Office
Office européen des brevets

(11) **EP 3 043 143 B1**

(12) **EUROPEAN PATENT SPECIFICATION**

(45) Date of publication and mention
of the grant of the patent:
**05.12.2018 Bulletin 2018/49**

(21) Application number: **14839421.6**

(22) Date of filing: **25.08.2014**

(51) Int Cl.:
*G01B 7/16* (2006.01)      *G01L 9/00* (2006.01)
*G06F 3/044* (2006.01)

(86) International application number:
**PCT/JP2014/072183**

(87) International publication number:
**WO 2015/029955 (05.03.2015 Gazette 2015/09)**

(54) **CAPACITIVE SENSOR SHEET AND CAPACITIVE SENSOR EQUIPPED THEREWITH**

KAPAZITIVE SENSORFOLIE UND DAMIT VERSEHENER KAPAZITIVER SENSOR

FEUILLE DE DÉTECTION CAPACITIVE ET CAPTEUR CAPACITIF ÉQUIPÉ DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2013   JP 2013178377**

(43) Date of publication of application:
**13.07.2016   Bulletin 2016/28**

(73) Proprietor: **Bando Chemical Industries, Ltd.
Kobe-shi, Hyogo 650-0047 (JP)**

(72) Inventors:
 • **OTAKA, Hideo
   Kobe-shi, Hyogo 650-0047 (JP)**
 • **NORISADA, Hideki
   Kobe-shi, Hyogo 650-0047 (JP)**

(74) Representative: **Sajda, Wolf E.
Meissner Bolte Patentanwälte
Rechtsanwälte Partnerschaft mbB
Postfach 86 06 24
81633 München (DE)**

(56) References cited:
**EP-A2- 2 053 495      JP-A- S62 226 030
JP-A- 2010 043 881     JP-A- 2011 014 142
JP-A- 2011 017 626     JP-A- 2011 133 421
US-A1- 2012 241 689**

**Description**

TECHNICAL FIELD

The present invention relates to a capacitive sensor sheet, and a capacitive sensor using the capacitive sensor sheet.

BACKGROUND ART

A capacitive sensor sheet can detect a concavo-convex shape of a measuring object from changes in capacitance between a pair of electrode layers, and can be used for surface pressure distribution sensors and sensors such as a strain gages. In general, the capacitance in a capacitive sensor is represented by the following Formula (1):

$$C = \varepsilon_0 \varepsilon_r S/d \qquad\qquad \dots (1).$$

In the above Formula, C represents a capacitance, $\varepsilon_0$ represents a permittivity in a free space, $\varepsilon_r$ represents a relative permittivity of a dielectric layer, S represents an area of the electrode layer, and d represents a distance between electrodes.

Conventionally, as a capacitive sensor sheet used as a surface pressure distribution sensor, for example, a sensor sheet which has a dielectric layer made of an elastomer, rectangular top electrodes arranged in a plurality of lines on the obverse-side of the dielectric layer, bottom electrodes arranged in a plurality of lines on the reverse-side of the dielectric layer, and a plurality of detection portions each formed because the top electrode intersects the bottom electrode as viewed in the obverse-reverse direction, and is stretchable as a unit, is known (refer to JP 2010-043 881 A).

In such a sensor, a load distribution of a measuring object can be measured by measuring changes in capacitance in each detection portion. US 2012/0241689 A1 discloses a capacitive sensor sheet comprising a dielectric layer, a top and a bottom electrode layer intersecting with each other in order to form a plurality of detection portions. This prior art document mentions the use of a flexible conductive layer to be coated on a flexible layer covering each electrode layer of the capacitive capacitive sensor in order to inhibit electromagnetic waves from external sources to affect the sensor.

SUMMARY OF INVENTION

TECHNICAL PROBLEM

However, in the case where the sensor sheet as disclosed in Patent Literature 1, which measures changes in capacitance, has a plurality of detection portions, the capacitance is incremented due to the cross-talk noise between the detection portions close to each other, and the capacitance of the detection portion becomes higher than a theoretical value in an initial state (deformation-free state). In such a case, there is a problem that a very small change in capacitance cannot be measured and the detection sensitivity is insufficient.

Further, when the capacitance is incremented due to the cross-talk noise between the detection portions close to each other, there is a problem that the change in capacitance is measured even in a region of deformation-free in deforming the capacitive sensor sheet and consequently the detection accuracy is insufficient.

The present invention has been made in view of such a situation, and it is an object of the present invention to provide a capacitive sensor sheet having excellent detection sensitivity and detection accuracy.

SOLUTION TO THE PROBLEM

In order to solve the above-mentioned problems, the present inventors made earnest investigations, and consequently they found that the increment of capacitance due to the cross-talk noise between the detection portions close to each other can be suppressed by disposing a covering electrode layer on an electrode layer with a flexible layer interposed therebetween so as to cover the detection portion, and these findings have led to completion of the present invention.

A capacitive sensor sheet of the present invention, which is defined in the appended independent claim 1, pertains to a capacitive sensor sheet comprising:

a dielectric layer including an elastomer composition (A);
a top electrode layer laminated on the obverse surface of the dielectric layer; and

a bottom electrode layer laminated on the reverse surface of the dielectric layer,
wherein a portion at which the top electrode layer and the bottom electrode layer intersect viewed in a thickness direction serves as a detection portion,
wherein the detection portion includes a plurality of detection portions,
the capacitive sensor sheet further including at least one of a top covering electrode layer formed over the top electrode layer so as to cover the detection portions with a top flexible layer including an elastomer composition (B1) interposed between the top electrode layer and the top covering electrode layer; and a bottom covering electrode layer formed over the bottom electrode layer so as to cover the detection portions with a bottom flexible layer including an elastomer composition (B2) interposed between the bottom electrode layer and the bottom covering electrode layer,
wherein each of the top flexible layer and the bottom flexible layer has an average thickness of 1 $\mu$m to 200 $\mu$m, and the capacitive sensor sheet is adapted to be used for measuring changes in capacitance in the detection portions.

In the capacitive sensor sheet, the top electrode layer and the bottom electrode layer preferably include an electroconductive composition containing carbon nanotubes. Herein, the carbon nanotubes are preferably a mixture of single-walled carbon nanotubes and multi-walled carbon nanotubes.

In the capacitive sensor sheet, an elastomer in the elastomer composition (A) is preferably a urethane elastomer. Further, an elastomer in at least one of the elastomer composition (B1) and the elastomer composition (B2) is preferably also a urethane elastomer.

In the capacitive sensor sheet, an elongation rate which the capacitive sensor sheet can endure in uniaxial tension is preferably 30 % or more.

The capacitive sensor sheet is preferably used for measurement of at least one of the following parameters: the amount of strain due to elastic deformation; the distribution of strain due to elastic deformation; and the surface pressure distribution, and more preferably used for measurement of at least one of the following parameters: the amount of strain due to elastic deformation; and the distribution of strain due to elastic deformation.

A capacitive sensor of the present invention pertains to a capacitive sensor comprising:

a capacitive sensor sheet of the present invention,
a measurement instrument, and
external conducting wires connecting each of the top electrode layer and the bottom electrode layer which are included in the capacitive sensor sheet to the measurement instrument,
wherein the sensor measures at least one of the following parameters: the amount of strain due to elastic deformation; the distribution of strain due to elastic deformation; and the surface pressure distribution by measuring changes in capacitance in the detection portions which are included in the capacitive sensor sheet.

## ADVANTAGEOUS EFFECTS OF THE INVENTION

In the capacitive sensor sheet of the present invention, since the covering electrode layer is formed at least on one surface side so as to cover the detection portion, the increment of capacitance due to the cross-talk noise in the detection portion can be suppressed. As a result of this, the detection sensitivity and detection accuracy in measuring changes in capacitance are particularly excellent.

Further, the capacitive sensor of the present invention can measure changes in capacitance at high sensitivity and at high accuracy since it includes the capacitive sensor sheet of the present invention.

## BRIEF DESCRIPTION OF DRAWINGS

| | |
|---|---|
| FIG. 1A | is a plan view schematically showing an example of a capacitive sensor sheet of the present invention, and FIG. 1B is a sectional view taken on line A-A of the capacitive sensor sheet shown in FIG. 1A. |
| FIG. 2 | is an exploded perspective view of the capacitive sensor sheet shown in FIGS. 1A and 1B. |
| FIG. 3 | is a schematic view showing an example of a capacitive sensor using the capacitive sensor sheet shown in FIGS. 1A and 1B and FIG. 2. |
| FIG. 4 | is a sectional view schematically showing another example of the capacitive sensor sheet of the present invention. |
| FIG. 5A | is a plan view schematically showing another example of the capacitive sensor sheet of the present invention, and FIG. 5B is a sectional view taken on line B-B of the capacitive sensor |

|  |  |
|---|---|
|  | sheet shown in FIG. 5A. |
| FIG. 6 | is a schematic view for explaining an example of a forming apparatus to be used for preparation of a dielectric layer contained in the capacitive sensor sheet of the present invention. |
| FIG. 7A and FIG. 7B | are photographs of a capacitive sensor prepared by using a capacitive sensor sheet prepared in Comparative Example 1. |
| FIG. 8A to FIG. 8C | are three-dimensional graphs showing a distribution of capacitances measured by a capacitive sensor sheet of Example 1. |
| FIG. 9A to FIG. 9C | are three-dimensional graphs showing a distribution of capacitances measured by a capacitive sensor sheet of Example 2. |
| FIG. 10A to FIG. 10C | are three-dimensional graphs showing a distribution of capacitances measured by a capacitive sensor sheet of Comparative Example 1. |
| FIG. 11A to FIG. 11C | are three-dimensional graphs showing a distribution of capacitance measured in other conditions using the capacitive sensor sheet of Example 1. |

DESCRIPTION OF EMBODIMENTS

Hereinafter, embodiments of the present invention will be described in reference to drawings.

First Embodiment

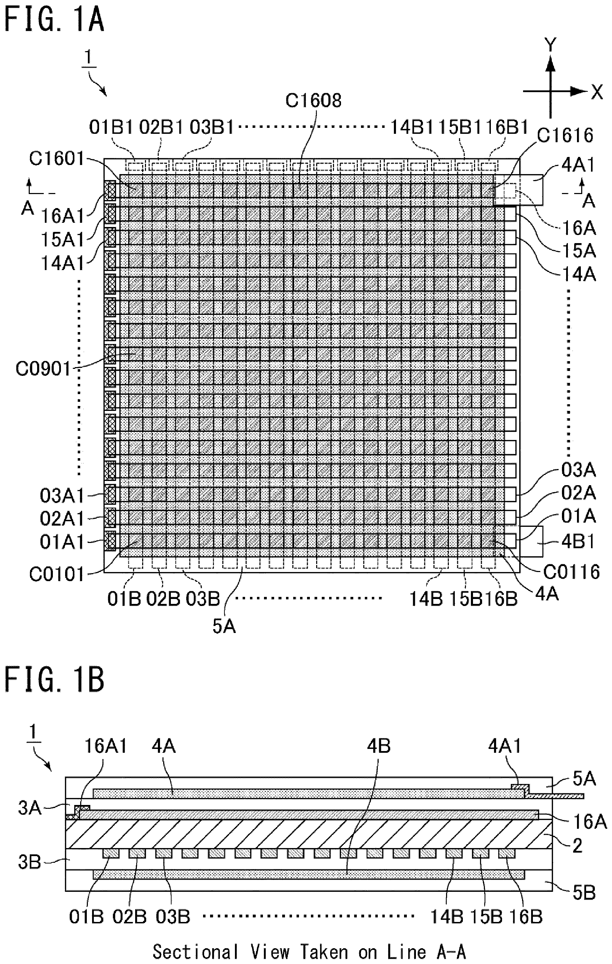

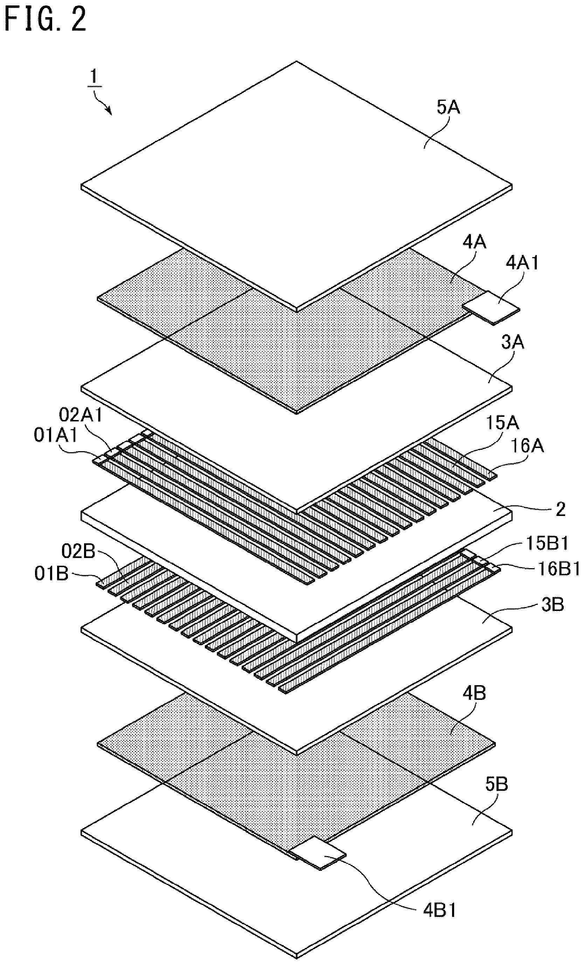

FIG. 1A is a plan view schematically showing an example of a capacitive sensor sheet of the present invention, and FIG. 1B is a sectional view taken on line A-A of the capacitive sensor sheet shown in FIG. 1A, and FIG. 2 is an exploded perspective view of the capacitive sensor sheet shown in FIGS. 1A and 1B.

As shown in FIGS. 1A and 1B and FIG. 2, a capacitive sensor sheet 1 of the present invention comprises a sheet-shaped dielectric layer 2, rectangular top electrode layers 01A to 16A laminated on the obverse surface of the dielectric layer 2, rectangular bottom electrode layers 01B to 16B laminated on the reverse surface of the dielectric layer 2, a top covering electrode layer 4A laminated over the top electrode layers 01A to 16A with a top flexible layer 3A interposed therebetween, a bottom covering electrode layer 4B laminated over the bottom electrode layers 01B to 16B with a bottom flexible layer 3B interposed therebetween, and overcoat layers 5A and 5B laminated on the top covering electrode layer 4A and the bottom covering electrode layer 4B, respectively.

Moreover, top connecting portions 01A1 to 16A1 for connection to external conducting wires and bottom connecting portions 01B1 to 16B1 for connection to external conducting wires are disposed at one ends of the top electrode layers 01A to 16A and one ends of the bottom electrode layers 01B to 16B, respectively. Further, connecting portions 4A1 and 4B1 for a covering electrode for connection to external conducting wires are disposed at a part of one side of the top covering electrode layer 4A and a part of one side of the bottom covering electrode layer 4B, respectively.

In the capacitive sensor sheet 1, portions at which the top electrode layers and the bottom electrode layers intersect as viewed in the obverse-reverse direction (thickness direction of the dielectric layer) are detection portions C0101 to C1616. In addition, left two-digit "oo" in symbols "C○○ΔΔ" of the detection portion corresponds to the top electrode layers 01A to 16A, and right two-digit "ΔΔ" corresponds to the bottom electrode layers 01B to 16B.

The top electrode layers 01A to 16A are respectively formed of a rectangle and composed of 16 electrode layers laminated on the obverse surface of the dielectric layer 2. Each of the top electrode layers 01A to 16A extends in an X-direction (lateral direction in FIG. 1A). The top electrode layers 01A to 16A are respectively arranged at predetermined intervals in a Y-direction (vertical direction in FIG. 1A) and in nearly parallel to one another.

The bottom electrode layers 01B to 16B are respectively formed of a rectangle and composed of 16 electrode layers laminated on the reverse surface of the dielectric layer 2. The bottom electrode layers 01B to 16B are arranged so that each of the bottom electrode layers 01B to 16B intersects the top electrode layers 01A to 16A substantially at a right angle as viewed in the obverse-reverse direction (thickness direction of the dielectric layer). That is, each of the bottom electrode layers 01B to 16B extends in the Y-direction. Further, the bottom electrode layers 01B to 16B are respectively arranged at predetermined intervals in the X-direction and in nearly parallel to one another.

By arranging each of the top electrode layers 01A to 16A and the bottom electrode layers 01B to 16B as described above, the number of the electrode layers for measurement to be arranged and the number of the electrode conducting wires can be reduced when measuring the changes in capacitance. That is, when the above-mentioned aspect is employed, the detection portions are efficiently arranged.

Hereinafter, arrangement will be described in more detail. In the example shown in FIGS. 1A and 1B, the detection portion, at which the top electrode layer intersects the bottom electrode layer a thickness direction, exists at 256 (16 × 16) locations, and if the detection portions positioned at the 256 locations are independently formed, 512 (256 × 2) conducting wires are required for detecting the capacitance of the detection portion since the top electrode and the bottom electrode exist per each detection portion. On the other hand, like the example shown in FIGS. 1A and 1B and FIG. 2, when the top electrode layers and the bottom electrode layers are composed of a plurality of rectangular objects arranged in parallel to one another, and the top electrode layers and the bottom electrode layers are arranged so that each of the top electrode layers intersects the bottom electrode layers substantially at a right angle as viewed in the obverse-reverse direction, detection of the capacitance in the detection portions requires only 32 (16 + 16) conducting wires. Therefore, as described above, in the capacitive sensor sheet 1, the detection portions are arranged efficiently.

On the other hand, when the detection portions are efficiently arranged as described above, in particular the increment of capacitance due to the cross-talk noise easily occurs in each detection portion. In contrast, the capacitive sensor sheet of the present invention has a plurality of detection portions and comprises covering electrode layer (at least one of the top covering electrode layer and the bottom covering electrode layer). By including the covering electrode layer, deterioration of the detection sensitivity and detection accuracy due to the cross-talk noise can be prevented.

Further, by including the covering electrode layer, external environment noise (e.g., static electricity) can be shielded. Thereby, the detection sensitivity and detection accuracy becomes higher.

The top covering electrode layer 4A and the bottom covering electrode layer 4B are arranged over the top electrode layers and the bottom electrode layers, respectively, with a top flexible layer 3A and a bottom flexible layer 3B interposed therebetween so as to cover the detection portions C0101 to C1616 in a plan view of the capacitive sensor sheet 1 (in a region where the covering electrode layers and the detection portions C0101 to C1616 overlap one another in the obverse-reverse direction (thickness direction)).

Moreover, the overcoat layers 5A and 5B are formed at the outermost layer of the capacitive sensor sheet 1 so as to cover the top covering electrode layer 4A and the bottom covering electrode layer 4B, respectively.

The capacitive sensor sheet 1 can be formed into a capacitive sensor by connecting the sensor sheet 1 to a measurement instrument as described later. In the capacitive sensor, it is possible that by switching each of 16 conducting wires by an external switching circuit, a capacitance of each of 256 detection portions can be measured while switching 256 detection portions one by one. As a result of this, the amount of strain, the position of strain, the surface pressure distribution and the like can be detected based on the capacitance of each detection portion.

In addition, in description of the present invention, in order to discriminate the covering electrode layer from the top electrode layer and the bottom electrode layer, sometimes the top electrode layer and the bottom electrode layer are collectively referred to as electrode layer for measurement.

Further, sometimes the top flexible layer and the bottom flexible layer are collectively referred to simply as flexible layer. Moreover, sometimes the top covering electrode layer and the bottom covering electrode layer are collectively referred to simply as covering electrode layer.

In the capacitive sensor sheet of the present invention, the elongation rate which the capacitive sensor sheet can endure in uniaxial tension is preferably 30 % or more, more preferably 50 % or more, moreover preferably 100 % or more, and particularly preferably 200 % or more. Followability to the deformation or motion of a flexible measuring object is improved by increasing the elongation rate and it becomes possible to measure changes in capacitance more exactly and in a wide measurement range.

On the other hand, an upper limit of the elongation rate which the capacitive sensor sheet can endure in uniaxial tension is not particularly limited; however, it is about 600 %.

In addition, in the present invention, the term "the elongation rate which the capacitive sensor sheet can endure in uniaxial tension" refers to an elongation rate which is equal to or lower than elongation at break in a tensile test according to JIS K 6251 and returns to its original state after releasing a tensile load.

For example, "the elongation rate which the capacitive sensor sheet can endure in uniaxial tension is 30 %" means that the sensor sheet does not break when being stretched by 30 % in a uniaxial direction and returns to its original state after releasing a tensile load (that is, the elongation rate is within a range of an elastic deformation).

In the capacitive sensor sheet, the elongation rate which the capacitive sensor sheet can endure in uniaxial tension can be controlled by design of the dielectric layer, the electrode layer for measurement, the flexible layer, the covering electrode layer and the overcoat layer. For example, the elongation rate which the capacitive sensor sheet can endure in uniaxial tension can be controlled by selection of an elastomer composition constituting the dielectric layer, the flexible layer or the overcoat layer, or selection of the component or content of the electrode layer for measurement or the covering electrode layer.

While as described above, the capacitive sensor sheet of the present invention preferably has a higher elongation rate which the capacitive sensor sheet can endure in uniaxial tension, particularly the elongation rate of 200 % or more, the above-mentioned elongation rate can be easily attained, for example, when the electrode layers (the electrode layers for measurement and the covering electrode layers) formed by using carbon nanotubes are used.

Therefore, when the electrode layers include an electroconductive composition containing carbon nanotubes, the elongation rate of the capacitive sensor sheet depends on the elongation rate of the dielectric layer, and in general, when the elongation rate of the dielectric layer exceeds 200 %, the elongation rate of the capacitive sensor sheet also exceeds 200 %.

The capacitive sensor sheet 1 becomes a capacitive sensor by connecting each of the top electrode layers and bottom electrode layers to a measurement instrument through external conducting wires, as described later, and it becomes possible to measure at least one of the amount of strain due to elastic deformation, the distribution of strain due to elastic deformation and the surface pressure distribution.

Examples of the capacitive sensor using the capacitive sensor sheet 1 shown in FIGS. 1A and 1B and FIG. 2 include a capacitive sensor as shown in FIG. 3.

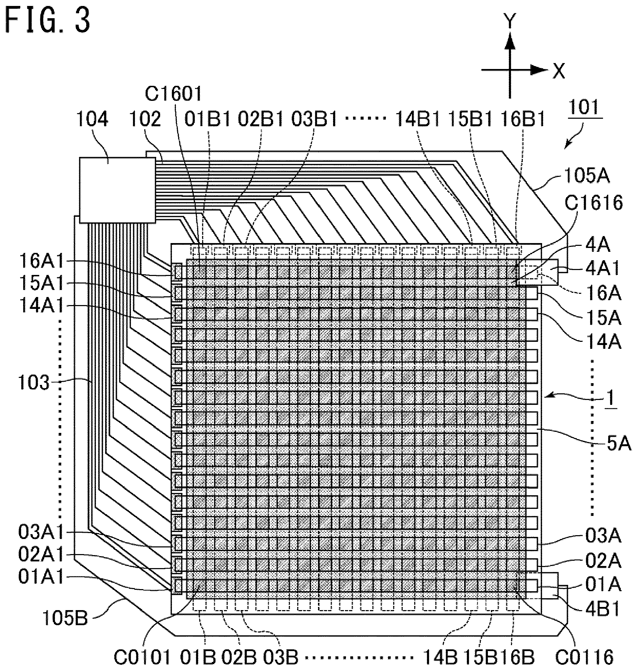

FIG. 3 is a schematic view showing an example of the capacitive sensor using the capacitive sensor sheet shown in FIGS. 1A and 1B and FIG. 2.

The capacitive sensor 101 shown in FIG. 3 comprises the capacitive sensor sheet 1 shown in FIGS. 1A and 1B, external conducting wires 102 and 103, a measurement instrument 104, and GND lines 105A and 105B.

Each of the top connecting portions 01A1 to 16A1 of the capacitive sensor sheet 1 is connected to the measurement instrument 104 through the external conducting wire 103 formed by binding a plurality (16) of conducting wires together. Also, each of the bottom connecting portions 01B1 to 16B1 is connected to the measurement instrument 104 through the external conducting wire 102 formed by binding a plurality (16) of conducting wires together.

The external conducting wires may be connected to only one ends of the top electrode layers and the bottom electrode layers as shown in FIG. 2; however, in some cases, the external conducting wires may be connected to both ends.

The measurement instrument 104 comprises, not shown, a power source circuit, a computing circuit, a circuit for measuring the capacitance, a switching circuit of pixels and a display device, as required. Specific examples of the measurement instrument 104 comprise an LCR meter and the like.

Each of the GND lines 105A and 105B is connected between each of connecting portions 4A1 and 4B1 for a covering electrode respectively provided at the top covering electrode layer 4A and the bottom covering electrode layer 4B and a GND terminal (not shown) disposed in the measurement instrument 104. Thereby, the connecting portions 4A1 and 4B1 for a covering electrode are grounded.

A capacitive sensor comprising such a capacitive sensor sheet of the present invention also constitutes the present invention.

Design of appearance configuration such as the average thickness, width and length of the capacitive sensor sheet 1 can be appropriately modified in accordance with use of the capacitive sensor sheet 1.

In the capacitive sensor sheet 101, the connecting portions for a covering electrode (covering electrode layers) are grounded; however, when the capacitive sensor sheet of the present invention is used, the covering electrode layers do not have to be grounded. However, by grounding the covering electrode layers, the increment of capacitance due to the cross-talk noise can be more surely reduced.

In the capacitive sensor using the capacitive sensor sheet of the present invention, a method of measuring the capacitance is not particularly limited; however, measuring methods with use of an alternating-current impedance, such as a technique of measuring the capacitance by measuring impedance at an alternating-current signal like an LCR meter, and a technique of measuring the capacitance by changing a voltage of output signals by impedance at an alternating-current signal, are preferred.

Measuring methods with use of an alternating-current impedance is excellent in repeat accuracy even in measurement using a high-frequency signal and does not cause an excessively high impedance by using a high-frequency signal, and therefore it can increase measurement accuracy further.

Moreover, the method can shorten a time required to measure the capacitance to enable the sensor to increase the number of measurement per time. Accordingly, for example, it is also possible to make measurement of detection of a motion speed by measuring strain (deformation) of the measuring object in a time-resolved manner.

Then, the capacitive sensor of the present invention is also suitable for measurement using a high-frequency signal.

Hereinafter, each constituent member of the capacitive sensor sheet of the present invention will be described.

Dielectric Layer

The dielectric layer has a sheet shape and includes an elastomer composition (A). In addition, the shape in a plan view of the dielectric layer is not particularly limited and it may be a rectangular shape as shown in FIG. 1A, or may be other shapes such as a circular shape.

The elastomer composition (A) contains at least an elastomer.

Examples of the elastomer include a natural rubber, an isoprene rubber, a nitrile rubber (NBR), an ethylene-propylene rubber (EPDM), a styrene-butadiene rubber (SBR), a butadiene rubber (BR), a chloroprene rubber (CR), a silicone rubber, a fluoro-rubber, an acrylic rubber, a hydrogenated nitrile rubber, a urethane elastomer and the like. These elastomers may be used singly, or may be used in combination of two or more thereof.

Among these, a urethane elastomer and a silicone rubber are preferred. The reason for this is that their permanent strains are low. When the permanent strain is low, an initial capacitance (capacitance at the time of no load) hardly varies even when the dielectric layer is used repeatedly (for example, even when stretch is repeated 1000 times). Therefore, excellent measurement accuracy as the capacitive sensor sheet can be maintained over an extended time period.

Moreover, the urethane elastomer is more preferred because of excellent adhesion to the carbon nanotube.

The urethane elastomer is not particularly limited and examples thereof include olefin-based urethane elastomers containing olefin-based polyol as a polyol component; ester-based urethane elastomers containing ester-based polyol as a polyol component; ether-based urethane elastomers containing ether-based polyol as a polyol component; carbonate-based urethane elastomers containing carbonate-based polyol as a polyol component; and castor oil-based urethane elastomers containing castor oil-based polyol as a polyol component. These urethane elastomers may be used singly, or may be used in combination of two or more thereof.

The urethane elastomer may be used in combination of two or more of the above-mentioned polyol components.

Among these urethane elastomers, olefin-based urethane elastomers are preferred from the viewpoint of high volume resistivity. Further, ester-based urethane elastomers or ether-based urethane elastomers are preferred from the viewpoint of a high elongation rate and high relative permittivity.

Naturally, various urethane elastomers may be mixed in consideration of the volume resistivity, the elongation rate and the permittivity to be imparted to the dielectric layer.

Examples of the olefin-based polyols include EPOL (produced by Idemitsu Kosan Co., Ltd.) and the like.

Examples of the ester-based polyols include POLYLITE 8651 (produced by DIC Corporation) and the like.

Further, examples of the ether-based polyols include polyoxytetramethylene glycol, PTG-2000SN (produced by Hodogaya Chemical Co., Ltd.), polypropylene glycol, PREMINOL S3003 (produced by Asahi Glass Co., Ltd.) and the like.

Further, the elastomer composition may contain additives such as a plasticizer, a chain extender, a crosslinking agent, a catalyst, a vulcanization accelerator, an antioxidant, an age resistor and a coloring agent in addition to the elastomer.

The elastomer composition may further contain dielectric fillers of barium titanate or the like. By containing the dielectric fillers, the capacitance C of the dielectric layer can be increased, and consequently the detection sensitivity of the capacitive sensor sheet can be enhanced.

When the elastomer composition contains the dielectric fillers, the content of the dielectric filler in the elastomer composition is usually higher than 0 % by volume and about 25 % by volume or less.

When the content of the dielectric filler is more than 25 % by volume, the hardness of the dielectric layer may be increased or the permanent strain of the dielectric layer may be increased. Further, in forming a dielectric layer, since viscosity of liquid before curing increases, formation of a thin film with high accuracy may become difficult.

The average thickness of the dielectric layer is preferably 10 $\mu$m or more and 1000 $\mu$m or less, and more preferably 30 $\mu$m or more and 200 $\mu$m or less from the viewpoint of increasing capacitance C to improve detection sensitivity and from the viewpoint of improving followability to the measuring object.

A relative permittivity of the dielectric layer at room temperature is preferably 2 or more, and more preferably 5 or more. When the relative permittivity of the dielectric layer is less than 2, the capacitance C is reduced and therefore there is a possibility that adequate sensitivity may not be attained in using the dielectric layer as a capacitive sensor.

A Young's modulus of the dielectric layer is preferably 0.1 MPa or more and 1 MPa or less. When the Young's modulus is less than 0.1 MPa, the dielectric layer is too soft, and therefore processing of high quality may be difficult and adequate measurement accuracy may not be attained. On the other hand, when the Young's modulus is higher than 1 MPa, there is a possibility that since the dielectric layer is too hard, it interferes with the motion of deformation of the measuring object when a deformation-load applied on the measuring object is small, and therefore measuring results do not meet a measuring purpose.

Hardness of the dielectric layer is preferably 0° to 30° in terms of the hardness (JIS A hardness) measured with a type A durometer according to JIS K 6253, or 10° to 55° in terms of the hardness (JIS C hardness) measured with a type C durometer according to JIS K 7321.

When the hardness measured with the type C durometer is less than 10°, the dielectric layer is too soft, and therefore processing of high quality may be difficult and adequate measurement accuracy may not be attained, and on the other hand, when the hardness measured with the type C durometer is more than 55°, the dielectric layer is too hard, and therefore it may interfere with the motion of deformation of the measuring object when a deformation-load applied on the measuring object is small. Therefore, there is a possibility that measuring results do not meet a measuring purpose.

Top Electrode Layer/Bottom Electrode Layer

Both of the top electrode layer and the bottom electrode layer comprise an electroconductive composition containing an electroconductive material.

The top electrode layer and the bottom electrode layer are usually formed by using the same material; however, the same material does not have to be used.

Examples of the electroconductive material include carbon nanotubes, graphenes, carbon nanohorns, carbon fibers, electroconductive carbon blacks, graphites, metal nanowires, metal nanoparticles, and electroconductive polymers. These materials may be used singly, or may be used in combination of two or more thereof.

As the electroconductive material, the carbon nanotubes are preferred.

As the carbon nanotube, publicly known carbon nanotubes can be used. The carbon nanotube may be single-walled carbon nanotube (SWNT) or may be multi-walled carbon nanotubes (MWNT) of two-layer or three or more layer.

Moreover, the shape of each carbon nanotube (average length and diameter, and aspect ratio) is not particularly limited, and may be appropriately selected in comprehensive consideration of the intended use of the capacitive sensor, the electric conductivity and durability required of the electrode layer for measurement, and treatment and cost for forming the electrode layer for measurement.

In the present invention, in particular it is preferred that (i) only long single-walled carbon nanotubes having a small diameter (fiber diameter) and a high aspect ratio are used as the carbon nanotubes, or (ii) a mixture of single-walled carbon nanotubes and multi-walled carbon nanotubes is used as the carbon nanotubes.

(i) Case where only long single-walled carbon nanotubes having a small diameter and a high aspect ratio are used

A lower limit of the average length of the single-walled carbon nanotubes is preferably 10 $\mu$m, more preferably 100 $\mu$m, moreover preferably 300 $\mu$m, and particularly preferably 600 $\mu$m. On the other hand, an upper limit of the average length of the single-walled carbon nanotubes is preferably 700 $\mu$m.

In particular, by using the single-walled carbon nanotubes having the average length of 100 $\mu$m to 700 $\mu$m, variations of electric resistance in repeated use can be remarkably suppressed.

Further, the aspect ratio of the single-walled carbon nanotube is preferably 100 or more, more preferably 1000 or more, moreover preferably 10000 or more, and particularly preferably 30000 or more.

By using long single-walled carbon nanotubes, the electrode layers for measurement (top electrode layer/bottom electrode layer) exert excellent stretchability to enable to improve followability to the deformation of the dielectric layer.

Further, when using the long single-walled carbon nanotube, variations in electric resistance is small in stretching the dielectric layer repeatedly, and therefore long-term reliability is excellent. The reason for this is probably that in the case of the long carbon nanotube, the carbon nanotube itself is easily stretched, and consequently a conductive path is hardly cut off when the electrode layer for measurement are elongated following the dielectric layer.

Further, when the electrode layer for measurement are formed by using an electroconductive composition containing carbon nanotubes, the electric conductivity is developed by contact (electric contact is formed) between carbon nanotubes. Herein, when the long carbon nanotubes are used, the electric conductivity is ensured by fewer electric contacts and the number of electric contacts with other carbon nanotubes in one carbon nanotube is larger compared with the case where short carbon nanotubes are used, and therefore a high-level electrical network can be formed, and this is regarded as a reason why the conductive path is hardly cut off.

In the present invention, it is advantageous from the following aspects to use long carbon nanotubes (carbon nanotubes having a large length and a large aspect ratio).

As a technique of improving the electric conductivity of the electrode layer for measurement comprising carbon nanotubes, in general, a method is conceivable in which the electrode layer for measurement is coated with or mixed with a low molecular material such as a charge transfer material or an ionic liquid as a dopant.

However, when the dopant is used in the electrode layer for measurement included in the capacitive sensor sheet of the present invention, there is a risk of migration of the dopant into the dielectric layer or the flexible layer, and for example, when the dopant migrates into the dielectric layer, a reduction of an electrically insulating property (a reduction of volume resistivity) of the dielectric layer or a reduction of durability at the time of repeated use of the dielectric layer may occur. When the reduction of an electrically insulating property or the reduction of durability occurs, there is a possibility that the measurement accuracy be deteriorated.

In contrast, when the long carbon nanotubes as described above are used as the carbon nanotubes, it is possible to impart sufficient electric conductivity to the electrode layer for measurement without using the dopant.

The long single-walled carbon nanotubes preferably have a purity of carbon of 99 % by weight or more.

When the electrode layer for measurement is formed using the long single-walled carbon nanotubes containing a large amount of impurities, the electric conductivity and elongation rate of the electrode layer for measurement may be deteriorated. Further, there is a possibility that the elastic modulus of the electrode layer for measurement is increased to make the sensor sheet hard, resulting in a reduction of stretchability.

(ii) Case where a mixture of single-walled carbon nanotubes and multi-walled carbon nanotubes is used

In this case, it is possible to keep electric resistance in a state of elongation-free (0 % elongation state) low in the electrode layer for measurement and to keep variations of measurement results in repeated use low.

Here, as the single-walled carbon nanotube, the above-mentioned long single-walled carbon nanotube is preferred.

On the other hand, the above-mentioned multi-walled carbon nanotube may be a double-walled carbon nanotube (DWNT) or a multi-walled carbon nanotube (MWNT) of three-layer or more (in the present specification, both carbon nanotubes are collectively referred to simply as a multi-walled carbon nanotube).

The average length of the multi-walled carbon nanotubes is preferably 1 to 10 $\mu$m. When the average length of the multi-walled carbon nanotubes is less than 1 $\mu$m, the number of contacts between carbon nanotubes in the conductive path increases, and consequently contact resistance increases, resulting in deterioration of the electric conductivity.

On the other hand, when the average length of the multi-walled carbon nanotubes is more than 10 $\mu$m, dispersion of the carbon nanotubes is deteriorated, and consequently the conductive path may not expand, resulting in deterioration of the electric conductivity. The average length is more preferably 1 $\mu$m to 5 $\mu$m, and moreover preferably 1 $\mu$m to 3 $\mu$m.

The fiber diameter of the multi-walled carbon nanotube is preferably 5 nm to 15 nm.

When the fiber diameter of the multi-walled carbon nanotube is less than 5 nm, dispersion of the multi-walled carbon nanotubes is deteriorated, and consequently the conductive path may not expand, resulting in deterioration of the electric conductivity.

On the other hand, when the fiber diameter of the multi-walled carbon nanotube is more than 15 nm, the number of carbon nanotubes is reduced even in the same weight, and therefore the electric conductivity may become insufficient.

The aspect ratio of the multi-walled carbon nanotube is preferably 50 to 2000.

In the mixture of single-walled carbon nanotubes and multi-walled carbon nanotubes, the content of the single-walled carbon nanotubes is preferably 20 % to 70 % by weight with respect to the total amount of the single-walled carbon nanotubes and the multi-walled carbon nanotubes.

When the content of the single-walled carbon nanotubes is less than 20 % by weight, variations of measured values in repeated use may increase. On the other hand, when the content of the single-walled carbon nanotubes is more than 70 % by weight, electric resistance (particularly electric resistance in a state of elongation-free (0 % elongation state)) may increase.

A lower limit of the content of the single-walled carbon nanotube is preferably 30 % by weight in that variations of electric resistance can be suppressed with more reliability.

The electroconductive composition may contain a binder component as a binding material of the electroconductive material in addition to the electroconductive material.

When the electroconductive composition contains the binder component, it is possible to improve the strength of the electrode layer for measurement, and it is possible to maintain the shape thereof even if a thickness of the electrode layer for measurement is large to prevent the occurrence of inner cracks or wrinkles of electrode layer for measurement. Further, it is also possible to improve the adhesion between the electrode layer for measurement and the dielectric layer or the flexible layer.

Moreover, when the electroconductive composition contains the binder component, scattering of the electroconductive material can be prevented in forming the electrode layer for measurement by a method described later. Accordingly, it is also possible to enhance safety in forming the electrode layer for measurement.

Examples of the binder component include a butyl-rubber, an ethylene-propylene rubber, polyethylene, chlorosulfonated polyethylene, a natural rubber, an isoprene rubber, a butadiene rubber, a styrene-butadiene rubber, polystyrene, a chloroprene rubber, a nitrile rubber, polymethylmethacrylate, polyvinylacetate, polyvinylchloride, an acrylic rubber, a styrene-ethylene-butylene-styrene block copolymer (SEBS), an epoxy resin and the like. These materials may be used singly, or may be used in combination of two or more thereof.

Further, as the binder component, a raw rubber (an unvulcanized natural rubber and an unvulcanised synthetic rubber) can also be used. When a material having relatively weak elasticity like the raw rubber is used, the followability of the electrode layer for measurement to the deformation of the dielectric layer can be enhanced.

The solubility parameter (SP value [$(cal/cm^3)^{1/2}$]) of the binder component preferably has a smaller difference with the solubility parameter (SP value) of the elastomer contained in the elastomer composition (A), an elastomer composition (B1) or an elastomer composition (B2) described later. The difference of the solubility parameter is more preferably within $\pm 1$ $(cal/cm^3)^{1/2}$.

When the difference of the solubility parameter (SP value) is within $\pm 1$ $(cal/cm^3)^{1/2}$, the adhesion between the dielectric layer or flexible layer and the electrode layer for measurement is extremely excellent. Accordingly, when the capacitive sensor sheet is repeatedly used, separation of the electrode layer for measurement from the dielectric layer or the flexible layer does not occur, and the sensor sheet becomes excellent in durability (long-term reliability).

In particular, it is preferred that the binder component and an elastomer contained in the elastomer composition (A), (B1) or (B2) are the same type of polymers.

In the present invention, the solubility parameters (SP values) of the elastomer contained in the elastomer composition, and the binder component are values calculated from Fedors' prediction method based on the following calculating Formula (2):

$$\delta = [\Sigma Ecoh/\Sigma V]^{1/2} \qquad \qquad \dots (2).$$

in which $\Sigma$Ecoh represents cohesion energy and $\Sigma$V represents a molar volume.

As the properties of the binder component itself, an elongation rate which the binder component can endure in uniaxial tension is preferably 30 % or more. Further, the property of the binder component itself is preferably 0° to 30° in terms of the hardness (JIS A hardness) measured with a type A durometer according to JIS K 6253, or 10° to 55° in terms of the hardness (JIS C hardness) measured with a type C durometer according to JIS K 7321.

Moreover, the elongation rate and the hardness are preferably close to and more preferably identical to the elongation rate and the hardness of the dielectric layer or the flexible layer.

In particular, the binder component is preferably the same as the elastomer contained in the elastomer composition (A), (B1) or (B2).

The electrode layer for measurement may contain a variety of additives in addition to the electroconductive material and the binder component. Examples of the additives include a dispersant for enhancing dispersibility of the carbon nanotubes, a crosslinking agent for the binder component, a vulcanization accelerator, a vulcanization aid, an age resistor, a plasticizer, a softening agent, and a coloring agent.

Herein, when the electrode layer for measurement contains a plasticizer and the elastomer compositions (A), (B1) and (B2) also contain a plasticizer, concentrations of both plasticizers in both compositions are preferably the same. The reason for this is that a transition of the plasticizer between the dielectric layer or the flexible layer and the electrode layer for measurement can be prevented, and consequently the occurrence of warpage and wrinkle in the capacitive sensor sheet can be suppressed.

When each of the electrode layers for measurement includes an electroconductive composition containing carbon nanotubes, the content of the carbon nanotubes is not particularly limited as long as it is a content at which required electric conductivity is exerted, and the content is preferably 0.1 % to 99.9 % by weight with respect to the total solid content of the electrode layer for measurement. The content of the carbon nanotubes is more preferably 5.0 % to 90.0 % by weight, moreover preferably 20 % to 70 % by weight, and particularly preferably 20 % to 50 % by weight.

Further, when the electroconductive composition contains a binder component, the content of the binder component is, depending on the kind of the binder component, preferably 10 to 95 % by weight with respect to the total solid content of the electrode layer for measurement.

A lower limit of the content of the binder component is more preferably 30 % by weight, and moreover preferably 50 % by weight. On the other hand, a more preferred upper limit of the content of the binder component is 80 % by weight. When the content of the binder component is within the above-mentioned range, adequate electric conductivity can be secured at a thickness (for example, 10 $\mu$m or less) which does not impair the flexibility or stretchability of the sensor sheet. In addition to this, it is easier to avoid intralayer destruction of the electrode layer for measurement (inner cracks of the electrode layer for measurement) even when the thickness of the electrode layer for measurement increases (e.g., 1 $\mu$m or more).

The average thickness of the electrode layers for measurement (average thickness of each of the top electrode layers and the bottom electrode layers) is preferably 0.1 $\mu$m or more and 10 $\mu$m or less. When the average thickness of each of the electrode layers for measurement is within the above-mentioned range, the electrode layers for measurement can exert excellent followability to the deformation of the dielectric layer.

In contrast, when the average thickness is less than 0.1 $\mu$m, there is a possibility that electric conductivity be insufficient resulting in a reduction of measuring accuracy.

On the other hand, when the average thickness is more than 10 $\mu$m, the capacitive sensor sheet becomes hard due to the reinforcing effect of the electroconductive material such as carbon nanotubes. As a result of this, there is a possibility that the followability to the measuring object is lowered and the deformation such as stretch is impaired.

The average thickness of the electrode layers for measurement is more preferably 1 $\mu$m to 10 $\mu$m.

In the present specification, "the average thickness of the electrode layers for measurement" is measured by using a laser microscope (e.g., VK-9510 manufactured by Keyence Corporation).

Specifically, the electrode layer for measurement laminated on the surface of the dielectric layer is scanned in increments of 0.01 $\mu$m in a direction of thickness to measure a three-dimensional shape thereof, and then an average height of a rectangular area 200 $\mu$m length $\times$ 200 $\mu$m width is measured in each of a region where the electrode layer for measurement is laminated on the surface of the dielectric layer and a region where the electrode layer is not laminated, and a difference in the average height between the two areas is taken as an average thickness of the electrode layer for measurement.

The transparency (transmittance of visible light) of the electrode layer for measurement is not particularly limited and the electrode layer for measurement may be transparent or may be opaque.

The dielectric layer which constitutes the capacitive sensor sheet of the present invention and includes the elastomer composition, can also be easily modified to a transparent dielectric layer, and a wholly transparent capacitive sensor sheet can also be formed by increasing the transparency of the electrode layer for measurement.

However, for example, when the electrode layers for measurement are formed using an electroconductive composition containing carbon nanotubes, carbon nanotubes need to be subjected to pretreatment such as high level of dispersion treatment or refining treatment, which complicates the step of forming the electrode layers for measurement and is economically disadvantageous.

On the other hand, the transparency of the electrode layer for measurement does not have an effect on the performance as the capacitive sensor sheet.

Therefore, when the transparency of the capacitive sensor sheet is required, a transparent electrode layer for measurement (for example, transmittance of visible light (550 nm) is 85 % or more) may be formed, and when the transparency is not required, an opaque electrode layer for measurement may be formed. The opaque electrode layer for measurement can be produced more easily and at lower cost.

In addition, when the transparent capacitive sensor sheet is formed, it is necessary to ensure the transparency (for example, visible light (light with a wavelength of 550 nm) transmittance is 85 % or more) also in the flexible layer, the covering electrode layer and the overcoat layer.

Top Flexible Layer/Bottom Flexible Layer

The top flexible layer includes the elastomer composition (B1) and the bottom flexible layer includes the elastomer composition (B2). Further, both of the top flexible layer and the bottom flexible layer have the shape in a plan view approximately similar to that of the dielectric layer and have a sheet shape.

As the elastomer compositions (B1) and (B2), elastomer compositions similar to the elastomer compositions exemplified above as the elastomer composition (A), can be used. Preferred compositions of the elastomer composition (B1) and the elastomer composition (B2) are also similar to that of the elastomer composition (A).

The elastomer composition (B1) and the elastomer composition (B2) may have the same composition or may have different compositions.

Both or one of the elastomer composition (B1) and the elastomer composition (B2) preferably contains a urethane elastomer as the elastomer. The reason for this is that the flexible layer including the elastomer composition in which the elastomer is a urethane elastomer has an extremely high adhesion to the electrode layer for measurement or the covering electrode layer.

In the capacitive sensor sheet, the elastomer composition (A) constituting the dielectric layer does not have to be the same as each of the elastomer composition (B1) and the elastomer composition (B2) constituting the flexible layers; however, the elastomer composition (A) is preferably the same as each of the elastomer composition (B1) and the elastomer composition (B2). The dielectric layer and the flexible layer which include an elastomer composition of the same composition have particularly excellent adhesion therebetween with the electrode layer for measurement interposed therebetween.

The average thickness of the flexible layer (average thickness of each of the top flexible layer and the bottom flexible layer) is 1 $\mu$m or more and 200 $\mu$m or less.

The flexible layer having the thickness less than 1 $\mu$m is hard to be formed as a uniform layer without defects, and if the defect is produced, short circuit between the electrode layer for measurement and the covering electrode layer occurs through the defect, and therefore the performance as the capacitive sensor sheet may fail to be ensured.

Moreover, when the thickness of the flexible layer is less than 1 $\mu$m, since a distance between the electrode layer for measurement and the covering electrode layer is too small, the electric conductivity of the electrode layer for measurement becomes insufficient even though cross-talk noise is adequately eliminated, and consequently the performance of the capacitive sensor sheet may become insufficient. In particular, measurement error may increase in measuring the capacitance at a high signal frequency. In addition, the reason why the electric conductivity of the electrode layer for measurement is lowered is that a capacitance between the electrode layer for measurement and the covering electrode layer is excessively high.

On the other hand, when the thickness of the flexible layer is more than 200 $\mu$m, the flexibility and stretchability of the capacitive sensor sheet may be deteriorated, and a capability of eliminating cross-talk noise may become insufficient because a distance between the electrode layer for measurement and the covering electrode layer is too large. In addition, the reason why the cross-talk noise cannot be adequately eliminated is that the capacitance between the electrode layer for measurement and the covering electrode layer is too small. The thickness of the flexible layer is limited to the above-mentioned range. However its design may be appropriately changed depending on the relative permittivity and thickness of the dielectric layer, the relative permittivity of the flexible layer, or a pattern, such as dimensions and number of electrodes, of the electrode layer for measurement.

Top Covering Electrode Layer/Bottom Covering Electrode Layer

The top covering electrode layer and the bottom covering electrode layer are each an electrode layer including an electroconductive composition containing an electroconductive material, and formed so as to cover the detection portions with the top flexible layer and the bottom flexible layer, respectively, interposed between the top covering electrode layer/the bottom covering electrode layer and the top electrode layers/the bottom electrode layers.

Examples of the electroconductive compositions include electroconductive compositions similar to the compositions exemplified above as the electroconductive composition constituting the electrode layer for measurement.

Also, the above-mentioned covering electrode layers (top covering electrode layer and bottom covering electrode layer) preferably include an electroconductive composition containing carbon nanotubes. Preferred composition of this electroconductive composition is similar to the preferred composition of the electroconductive composition constituting the top electrode layer or the bottom electrode layer.

That is, (i) an electroconductive composition in which only long single-walled carbon nanotubes having a small diameter and a high aspect ratio are used as the carbon nanotubes, or (ii) an electroconductive composition in which a mixture of single-walled carbon nanotubes and multi-walled carbon nanotubes is used as the carbon nanotubes, is preferred.

The reason for this is that the covering electrode layer also requires having excellent durability to repeated deformation in order to be deformed following the deformation of the capacitive sensor sheet, and requires high electric conductivity in order to eliminate cross-talk noise with more reliability.

The electroconductive composition constituting the covering electrode layer may contain a binder component and the like as with the electroconductive composition constituting the electrode layer for measurement. In this case, the binder component is preferably a polymer which is close in SP value to, or similar to or identical to the elastomer contained in the elastomer composition (B1) or (B2) or the overcoat layer.

Each of the top covering electrode layer and the bottom covering electrode layer may be composed of the same electroconductive composition as that of the electrode layer for measurement, or may be composed of an electroconductive composition different from that of the electrode layer for measurement.

However, each of the top covering electrode layer and the bottom covering electrode layer is preferably composed of the same electroconductive composition as that of the electrode layer for measurement. The reason for this is that since, as the capacitive sensor sheet is used, the electrode layer for measurement and the covering electrode layer produce the same deformation area at the same frequency, the properties relating to the extent of deformation range and to the repeatable number of use of the capacitive sensor sheet are preferably at the same level between the electrode layer for measurement and the covering electrode layer (it is not advantageous even when an either one has an excessive specification).

Further, the electrode layer for measurement and the covering electrode layer composed of the same electroconductive composition have similarities in their behaviors when the capacitive sensor sheet is deformed. As a result of this, stress concentration resulting from the difference in behaviors between the electrode layer for measurement and the covering electrode layer in deformation hardly occurs in the capacitive sensor sheet.

The average thickness of the covering electrode layer (average thickness of each of the top covering electrode layer and the bottom covering electrode layer) is preferably 0.1 $\mu$m or more and 10 $\mu$m or less. When the average thickness of the covering electrode layer is within the above-mentioned range, the covering electrode layer can exert excellent followability to the deformation of other layers such as the dielectric layer.

In contrast, when the average thickness is less than 0.1 $\mu$m, there is a possibility that a capability of eliminating cross talk becomes insufficient because of insufficient electric conductivity. In particular, the cross-talk noise may fail to be adequately eliminated in measurement at a high signal frequency.

On the other hand, when the average thickness is more than 10 $\mu$m, the capacitive sensor sheet becomes hard by the reinforcing effect due to the electroconductive material such as carbon nanotubes. Therefore, there is a possibility that the followability to the measuring object is lowered and the deformation such as stretch is impaired.

The average thickness of the covering electrode layer is more preferably 1 to 10 $\mu$m.

Overcoat Layer

The overcoat layer has a shape in a plan view similar to that of the dielectric layer and has a sheet shape. The covering electrode layer or the like can be protected from external impact, dirt or dust by disposing the overcoat layer. Further, it is possible to suppress electric continuity of the covering electrode layer with an external member by disposing the overcoat layer.

The purpose of forming the overcoat layer is not limited to protection of the covering electrode layer, and for example, by forming a colored overcoat layer, it is possible to hide the covering electrode layer in external view, and by coloring a part of the overcoat layer, it is possible to impart good design to the capacitive sensor sheet. Further, an overcoat layer with a printed surface may be employed.

Furthermore, for example, if the overcoat layer has adhesiveness or tackiness, the measuring object can be bonded to the capacitive sensor sheet. Further, for example, the surface of the overcoat layer can also be brought into a low-$\mu$ surface layer with low friction coefficient.

Specific examples of the case where excellent design is imparted to the overcoat layer (the case of the printed surface) as described above include the case of using the capacitive sensor sheet of the present invention as an input interface of a flexible touch panel having stretchability. In this case, for example, an apparent button or keyboard at an input position or a product logo is printed on the surface of the overcoat layer.

When printing is performed on the surface of the overcoat layer, printing may be performed by ink-jet printing, screen printing, gravure printing or the like using, for example, aqueous ink, solvent ink, UV-curable ink or the like.

More specifically, for example, a publicly known solvent ink predominantly composed of a solvent, a pigment, a vehicle and an adjuvant to be mixed as required may be used for the solvent ink.

Examples of the solvent include glycol ether-based solvents such as diethylene glycol diethyl ether, tetraethylene glycol dimethyl ether and tetraethylene glycol monobutyl ether; lactone-based solvents such as $\gamma$-butyrolactone; low-boiling-point aromatic naphtha, and propylene glycol monomethyl ether acetate.

Examples of the pigment include carbon black (black), copper phthalocyanine (cyan), dimethylquinacridone (magenta), pigment yellow (yellow), titanium oxide, aluminum oxide, zirconium oxide, nickel compound and the like. As the pigment, other various pigments have been known and, naturally, the pigment is not limited the above-mentioned pigments.

A material of the overcoat layer is not particularly limited and may be appropriately selected in accordance with the purpose of formation thereof. It is possible to use, as the material of the overcoat layer, for example, a composition obtained by mixing, as required, a coloring agent (pigment or dye) in an elastomer composition similar to the elastomer composition exemplified above as the elastomer composition (A).

In this case, the elastomer contained in the overcoat layer is preferably an elastomer which is kindred to or similar to the elastomer contained in the elastomer composition (B1) or (B2) constituting the flexible layer opposed to the overcoat layer with the covering electrode layer interposed therebetween, or an elastomer close in SP value to the elastomer contained in the elastomer composition (B1) or (B2). The reason for this is that the above-described overcoat layer has excellent adhesion to the flexible layer.

The capacitive sensor sheet of the present invention does not necessarily include the overcoat layer. The overcoat layer is an optional constituent feature in the capacitive sensor sheet of the present invention.

In addition, in the capacitive sensor sheet of the present invention, the overcoat layer may be formed on only one of an obverse side and a reverse side.

The average thickness of the overcoat layer is preferably 1 to 100 $\mu$m.

When the thickness of the overcoat layer is less than 1 $\mu$m, it is difficult to form the overcoat layer as a uniform layer without defects, and if the defect of the overcoat layer is produced, the electrode layer for measurement or the covering electrode layer may be exposed through the defect. As a result of this, there may be cases where the overcoat layer cannot play a role of protecting the electrode layer for measurement and the covering electrode layer.

On the other hand, when the thickness of the overcoat layer is more than 100 $\mu$m, flexibility or stretchability of the capacitive sensor sheet may be deteriorated.

The thickness of the overcoat layer is not limited to the above-mentioned range, and since as described above, it is possible to provide additional functions to the overcoat layer so that the overcoat layer has a printed surface, an adhesive surface or a low-$\mu$ surface for example, design of the overcoat layer can be appropriately changed according to the additional functions.

Detection Portion: C0101 to C1616 in FIG. 1A

The detection portions C0101 to C1616, as indicated by dense hatching in

FIG. 1A, are arranged at portions at which the top electrode layers 01A to 16A and the bottom electrode layers 01B to 16B intersect (overlapped portion) as viewed in the obverse-reverse direction (thickness direction) of the dielectric layer.

The capacitive sensor sheet 1 has 256 (16 × 16) detection portions C0101 to C 1616 in total. The detection portions C0101 to C1616 are arranged at nearly regular intervals over almost the entire surface of the capacitive sensor sheet 1. Each of the detection portions C0101 to C1616 includes part of the top electrode layers 01A to 16A, part of the bottom electrode layers 01B to 16B and part of the dielectric layer 2.

In the capacitive sensor sheet of the present invention having such a constitution, a change amount ΔC in capacitance can be detected from the capacitance C before being deformed by contact with a measuring object and the capacitance C after being deformed by contact with the measuring object to determine the amount of strain due to elastic deformation, the distribution of strain due to elastic deformation and the surface pressure distribution.

Further, the capacitive sensor sheet of the present invention has a high elongation rate, can be stretched by 30 % or more repeatedly in a direction of one-axis, can follow the deformation or motion of a flexible measuring object, and has excellent durability for elastic deformation and repeated deformation. The capacitive sensor sheet can, for example, trace the shape of the measuring object or directly detect the motion of the measuring object.

Other Embodiments

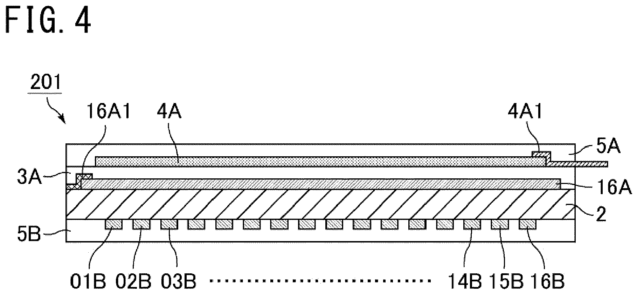

The constitution of the capacitive sensor sheet of the present invention is not limited to the constitution of the capacitive sensor sheet shown in FIGS. 1A and 1B and FIG. 2, and the capacitive sensor sheet may have, for example, the constitution as shown in FIG. 4.

FIG. 4 is a sectional view schematically showing another example of the capacitive sensor sheet of the present invention.

The capacitive sensor sheet 201 shown in FIG. 4 is different from the capacitive sensor sheet 1 shown in FIGS. 1A and 1B and FIG. 2 in that the covering electrode layer 4A (top covering electrode layer 4A) is disposed on only one face side (surface-side) of the dielectric layer 2. The constitution of the capacitive sensor sheet 201 is the same as that of the capacitive sensor sheet 1 shown in FIGS. 1A and 1B and FIG. 2 except that the bottom flexible layer 3B and the bottom covering electrode layer 4B are not formed.

As described above, in the capacitive sensor sheet of the present invention, the covering electrode layer may be formed only on one surface side. This case exerts the effect similar to the case in which the covering electrode layers are formed on both surfaces of the dielectric layer and can achieve the purpose.

In the capacitive sensor sheet 201, only the top covering electrode layer is formed; however, only the bottom covering electrode layer may be formed in the case where a covering electrode layer is formed on only one face in a capacitive sensor sheet.

The capacitive sensor sheet of the present invention, as described above, may comprise both of the top covering electrode layer and the bottom covering electrode layer, or may comprise either the top covering electrode layer or the bottom covering electrode layer.

Herein, whether the capacitive sensor sheet comprises both covering electrode layers or comprises either the top covering electrode layer or the bottom covering electrode layer may be appropriately selected in consideration of properties required of the capacitive sensor sheet.

Specifically, the capacitive sensor sheet of the present invention preferably comprises both of the top covering electrode layer and the bottom covering electrode layer in that the increment of capacitance due to the cross-talk noise can be more surely eliminated and in that measurement accuracy as the sensor sheet is more excellent.

On the other hand, the capacitive sensor sheet of the present invention preferably comprises any one of the top covering electrode layer and the bottom covering electrode layer because of being easy to maintain the electric conductivity of an electrode layer for measurement while forming a covering electrode layer, because of being easy to ensure the flexibility of a capacitive sensor sheet, and because of being easy to make a capacitive sensor sheet thinner.

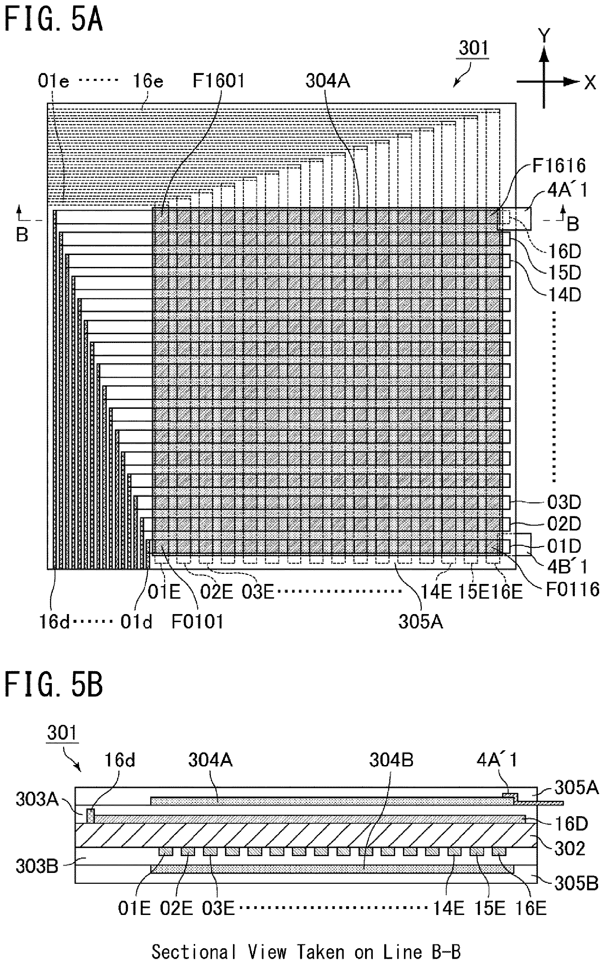

A constitution of the capacitive sensor sheet of the present invention may be a constitution shown in FIGS. 5A and 5B.

FIG. 5A is a plan view schematically showing another example of the capacitive sensor sheet of the present invention, and FIG. 5B is a sectional view taken on line B-B of FIG. 5A.

The capacitive sensor sheet 301 shown in FIGS. 5A and 5B comprises a sheet-shaped dielectric layer 302, rectangular top electrode layers 01D to 16D laminated on the obverse surface of the dielectric layer 302, rectangular bottom electrode layers 01E to 16E laminated on the reverse surface of the dielectric layer 302, top conducting wires 01d to 16d connected to one ends of the top electrode layers 01D to 16D and extended to an outer edge of the dielectric layer 302, and the bottom conducting wires 01e to 16e connected to one ends of the bottom electrode layers 01E to 16E and extended to the outer edge of the dielectric layer 302.

Further, the capacitive sensor sheet 301 comprises, a top covering electrode layer 304A laminated over the top electrode layers 01D to 16D with a top flexible layer 303A interposed therebetween, and comprises, a bottom covering electrode layer 304B laminated over the bottom electrode layers 01E to 16E with a bottom flexible layer 303B interposed therebetween. Furthermore, overcoat layers 305A and 305B are laminated on the top covering electrode layer 304A and the bottom covering electrode layer 304B, respectively.

Also in the capacitive sensor sheet 301, portions at which the top electrode layers 01D to 16D and the bottom electrode layers 01E to 16E intersect as viewed in the obverse-reverse direction (thickness direction of the dielectric layer) are detection portions F0101 to F1616. In addition, left two-digit "○○" in symbols "F○○△△" of the detection portion corresponds to the top electrode layers 01D to 16D, and right two-digit "∆∆" corresponds to the bottom electrode layers 01E to 16E.

The top electrode layers 01D to 16A each have a shape of a rectangle and are composed of 16 electrode layers laminated on the obverse surface of the dielectric layer 302. Each of the top electrode layers 01D to 16D extends in an X-direction (lateral direction in FIG. 5A). The top electrode layers 01D to 16D are arranged at predetermined intervals in a Y-direction (vertical direction in FIG. 5B) and in nearly parallel to one another.

Linear top conducting wires 01d to 16d, which are extended in the Y-direction, are connected to left ends of the top electrode layers 01D to 16D. The other ends of the top conducting wires 01d to 16d extend to the outer edge of the dielectric layer 302.

The bottom electrode layers 01E to 16E each have a shape of a rectangle and are composed of 16 electrode layers laminated on the reverse surface of the dielectric layer 302. The bottom electrode layers 01E to 16E are arranged so that each of the bottom electrode layers 01E to 16E intersects the top electrode layers 01D to 16D substantially at a right angle as viewed in the obverse-reverse direction. That is, each of the bottom electrode layers 01E to 16E extends in the Y-direction.

Further, the bottom electrode layers 01E to 16E are arranged at predetermined intervals in the X-direction and in nearly parallel to one another. Linear bottom conducting wires 01e to 16e, which are extended in the X-direction, are connected to one ends (upper ends) of the bottom electrode layers 01E to 16E. The other ends of the bottom conducting wires 01e to 16e extend to the outer edge of the dielectric layer 302.

In the capacitive sensor sheet 301, materials constituting the top conducting wire and the bottom conducting wire are not particularly limited, and publicly known materials to be used for electric conducting wires can be used.

As a material constituting the top conducting wire and the bottom conducting wire, the same one as the above-mentioned material constituting the electrode layers for measurement is preferred. By using the same one as the material constituting the electrode layers for measurement, conducting wires (top conducting wires and bottom conducting wires) can also be stretched and deformed and therefore they do not interfere with the deformation of the sensor sheet due to the measuring object.

More specifically, by forming the top conducting wires and the bottom conducting wires so as to be thin in line width and large in thickness using a material similar to the material for forming the electrode layer for measurement, it is possible to form conducting wires which can follow the sensor sheet without impairing the stretchability of the sensor sheet while maintaining sufficient electric conductivity and can withstand a repeated elongation as with the electrode layer for measurement.

On the other hand, for example, when the top conducting wires and the bottom conducting wires are formed by using a metal material, it is disadvantageous since there is a possibility that stretchability is impaired at portions provided with the conducting wires.

Each of the other ends of the top conducting wires 01d to 16d and the other ends of the bottom conducting wires 01e to 16e is connected to a connector, not shown, having a metallic contact and can be connected to an external conducting wire through the connector.

The capacitive sensor sheet 301 having such a constitution also becomes a capacitive sensor by connecting each of the top electrode layers and bottom electrode layers to a measurement instrument through external conducting wires, as with the capacitive sensor sheet 1 shown in FIGS. 1A and 1B and FIG. 2.

Moreover, the present invention can be embodied in the form in which various modifications and improvements are made in addition to the above embodiment.

For example, the number of the top electrode layers 01A to 16A and the number of the bottom electrode layers 01B to 16B to be arranged are set to 16 in the capacitive sensor sheet 1 in the embodiment shown in FIGS. 1A and 1B and FIG. 2, but the number of electrode layers to be arranged is not particularly limited. Also, an angle at which the top electrode layers 01A to 16A and the bottom electrode layers 01B to 16B cross each other in the above embodiment is not particularly limited.

While in the capacitive sensor sheet 1 in the embodiment shown in FIGS. 1A and 1B and FIG. 2, both of the top covering electrode layer 4A and the bottom covering electrode layer 4B are each an electrode layer of the form in which a whole region constituting the covering electrode layer is a filled coating layer, the covering electrode layer in the capacitive sensor sheet of the present invention may be, for example, an electrode layer having a lattice shape in a plan view as long as it is formed so as to cover the detection portions.

When the capacitive sensor sheet comprises both of the top covering electrode layer and the bottom covering electrode layer, shapes of both covering electrode layers may be the same or different.

Next, a method for producing a capacitive sensor sheet of the present invention will be described.

Here, taking the capacitive sensor sheet 1 shown in FIGS. 1A and 1B and FIG. 2 as an example, a method for producing the capacitive sensor sheet 1 will be described.

The capacitive sensor sheet can be produced through, for example:

(1) a step of forming the dielectric layer, the top flexible layer, the bottom flexible layer and the overcoat layer separately (hereinafter, also referred to as "step 1"),

(2) a step of preparing an application liquid for forming an electrode layer which contains an electroconductive material such as carbon nanotubes, a dispersion medium and the like (hereinafter, also referred to as "step 2"), and

(3) a step of forming an electrode layer (electrode layer for measurement or a covering electrode layer) by applying the application liquid for forming an electrode layer at a predetermined time and drying the application liquid while laminating the dielectric layer, the top flexible layer, the bottom flexible layer and the overcoat layers in a predetermined order (hereinafter, also referred to as "step 3").

Hereinafter, the steps will be described in this order.

Step (1)

In the step (1), the dielectric layer, the flexible layers (top flexible layer, bottom flexible layer) and the overcoat layers are formed separately. In the formation of any of the dielectric layer, the flexible layers and the overcoat layers, each of raw material compositions containing an elastomer is formed into a sheet shape to prepare a sheet-like product.

For this, at first, a raw material composition is prepared which is formed by mixing, as required, additives such as a dielectric filler, a plasticizer, a chain extender, a crosslinking agent, a vulcanization accelerator, a catalyst, an antioxidant, an age resistor and a coloring agent in the elastomer (or its raw material).

A method of preparing the raw material composition and a method of preparing the sheet-like product are not particularly limited, and publicly known methods can be employed.

Specifically, when the elastomer is a urethane elastomer, for example, at first, a polyol component, a plasticizer and an antioxidant are weighed and mixed/stirred for a given period of time under heating and reduced pressure to prepare a mixed solution. Next, the mixed solution is weighed, its temperature is adjusted, and then a catalyst is added and the resulting mixture is stirred with AJITER or the like.

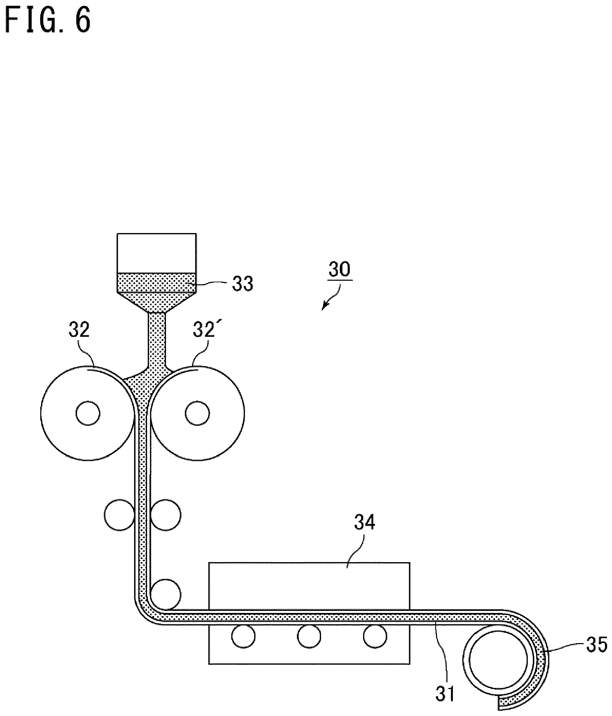

Thereafter, a predetermined amount of an isocyanate component is added, and the resulting mixed solution is stirred with AJITER or the like, immediately injected into a forming apparatus shown in FIG. 6, and the resulting formed product is cross-linked/cured while being carried in a state of being sandwiched between protection films to obtain a rolled sheet with protection films, which has a predetermined thickness.

Thereafter, the rolled sheet is further subjected to a crosslinking reaction (post-crosslinking) for a given period of time in a furnace, as required. Thereby, a sheet-like product to serve as any one of the dielectric layer, the flexible layers (top flexible layer, bottom flexible layer) and the overcoat layers, can be prepared.

FIG. 6 is a schematic view for explaining an example of a forming apparatus to be used for preparation of the sheet-like product.

In the forming apparatus 30 shown in FIG. 6, a raw material composition 33 is poured into a gap between protection films 31 made of polyethylene terephthalate (PET) continuously sent out from a pair of rollers 32, 32' placed apart from each other, and introduced into a heating unit 34 in a state where the raw material composition 33 is held in the gap while a curing reaction (crosslinking reaction) is allowed to proceed, and in the heating unit 34, the raw material composition 33 is thermally cured in a state of being held between the pair of protection films 31 to form a sheet-like product.

When the elastomer is an acrylic rubber, for example, at first, acrylic acid ester and a photopolymerization initiator are mixed, and then the resulting mixture is irradiated with UV light to prepare a prepolymer. Thereafter, in the prepolymer, a chain extender such as acrylic acid and a crosslinking agent such as trimethylolpropane triglycidyl ether are mixed.

Then, the resulting mixture is charged into a forming apparatus having the same configuration as that of the forming apparatus 30 shown in FIG. 6 except for having an UV irradiation unit in place of the heating unit 34, and the mixture is irradiated with UV light in a state where the mixture is held in the gap between protection films made of polyethylene terephthalate (PET) to be cured, and thereby a sheet-like product can be prepared.

When the elastomer is EPDM, for example, a sheet-like product can be prepared by mixing EPDM and a crosslinking agent, and then press-molding the resulting mixture.

Further, when the elastomer is a silicone rubber, a sheet-like product can be prepared by mixing a silicone rubber and a crosslinking agent, and then charging the resulting mixture into a forming apparatus shown in FIG. 6 to cure the mixture.

Further, the sheet-like product may be prepared using a general-purpose film forming apparatus or a film forming method such as various coating apparatuses, bar coating or doctor blade coating after preparing a raw material composition.

Step (2)

In the step (2), an application liquid for forming an electrode layer which contains an electroconductive material such as carbon nanotubes, a dispersion medium and the like, is prepared.

Specifically, at first, an electroconductive material is added to a dispersion medium such as toluene. In this time, as required, a binder component (or a raw material of the binder component), a dispersant, other various additives or the like may be added to the dispersion medium.

Next, the respective components containing the electroconductive material are dispersed (or dissolved) in the dispersion medium by using a wet type dispersing machine, and thereby an application liquid for forming an electrode layer is prepared. Herein, the electroconductive material and other components may be dispersed by using an existing dispersing machine such as an ultrasonic dispersing machine, a jet mill, a beads mill or a stirrer.

In the preparation of the application liquid for forming an electrode layer, the dispersion medium is not limited to toluene, and examples of a dispersion medium other than toluene include methyl isobutyl ketone (MIBK), alcohols, water and the like. These dispersion media may be used singly, or may be used in combination of two or more thereof.

When the electroconductive material is the carbon nanotubes, a concentration of the carbon nanotubes in the application liquid for forming an electrode layer is preferably 0.01 to 10 % by weight.

When the concentration of the carbon nanotubes is lower than 0.01 % by weight, the concentration of the carbon nanotubes is too low, and therefore the application liquid may need to be applied repeatedly. On the other hand, when the concentration of the carbon nanotubes is higher than 10 % by weight, there may be cases where the dispersibility of the carbon nanotubes is deteriorated because of too high viscosity of the application liquid or re-aggregation of carbon nanotubes, leading to difficulty in formation of uniform electrode layer (electrode layer for measurement, covering electrode layer).

Further, when the mixture of single-walled carbon nanotubes and multi-walled carbon nanotubes is used as the carbon nanotubes, any of the following methods (a) and (b) may be used.

(a) The single-walled carbon nanotubes and multi-walled carbon nanotubes are added to separate dispersion media and dispersed (or dissolved) in each dispersion medium by using a wet type dispersing machine, and then a dispersion of the single-walled carbon nanotubes and a dispersion of the multi-walled carbon nanotubes are mixed to form an application liquid.

(b) The single-walled carbon nanotubes and multi-walled carbon nanotubes are added to a dispersion medium, and the resulting mixture is dispersed (or dissolved) in the dispersion medium by using a wet type dispersing machine to form an application liquid.

Step (3)

In the step (3), an electrode layer (top electrode layer, bottom electrode layer, top covering electrode layer or bottom covering electrode layer) is formed by applying the application liquid for forming an electrode layer at a predetermined time and drying the application liquid while laminating the dielectric layer, the top flexible layer, the bottom flexible layer and the overcoat layers in a predetermined order.

Specifically, for example, the following steps (3-1) to (3-7) are performed.

(3-1) A bottom covering electrode layer is formed by applying the application liquid for forming an electrode layer prepared in the step (2) onto a predetermined position of the one surface of the overcoat layer formed in the step (1) (becoming a bottom overcoat layer 5B in a completed product) with an air brush or the like, and drying the application liquid.

In this time, the application liquid may be applied after masking a location of the overcoat layer where the bottom covering electrode layer is not formed, as required.

Conditions of drying the application liquid are not particularly limited and may be appropriately selected in accordance with the kind of dispersion medium or the like.

A method of applying the application liquid is not limited to the method of application using the air brush, and a screen printing method, an ink-jet printing method and the like can also be employed.

(3-2) The bottom flexible layer is laminated on the overcoat layer provided with the bottom covering electrode layer by use of a metallic hand roller or the like to laminate the bottom flexible layer so as to sandwich the bottom covering electrode layer between the overcoat layer and the bottom flexible layer.

(3-3) The application liquid for forming an electrode layer is applied in a predetermined shape (rectangle) onto a predetermined position on the surface of the bottom flexible layer and dried to form bottom electrode layers.

The bottom electrode layers are formed, for example, so as to be about 1 mm to 20 mm in width and about 50 mm to 500 mm in length, and to be spaced at intervals of about 1 mm to 5 mm and in nearly parallel to one another.

In this time, the application liquid may be applied after masking, as required, a location on the surface of the bottom flexible layer where a bottom electrode layers is not formed.

In this step, with respect to an application method and drying conditions of the application liquid for forming an electrode layer, the same method and condition as in the step (3-1) may be employed.

(3-4) The dielectric layer is laminated on the bottom flexible layer provided with the bottom electrode layers by use of a metallic hand roller or the like to laminate the dielectric layer so as to sandwich the bottom electrode layers between the bottom flexible layer and the dielectric layer.

(3-5) The application liquid for forming an electrode layer is applied in a predetermined shape (rectangle) onto a predetermined position of the obverse surface of the dielectric layer and dried to form top electrode layers.

In this step, as a method of forming the top electrode layers, it is possible to employ the same method as the method of forming the bottom electrode layers in the above step (3-3).

(3-6) The top flexible layer is laminated on the dielectric layer provided with the top electrode layers by use of a metallic hand roller or the like to laminate the top flexible layer so as to sandwich the top electrode layers between the dielectric layer and the top flexible layer. Subsequently, a top covering electrode layer is formed on the surface of the top flexible layer using the same method as in the step (3-1).

(3-7) The overcoat layer is laminated on the top flexible layer provided with the top covering electrode layer by use of a metallic hand roller or the like to laminate the overcoat layer (becoming an top overcoat layer 5A in a completed product) so as to sandwich the top covering electrode layer between the top flexible layer and the overcoat layer.

The capacitive sensor sheet shown in FIGS. 1A and 1B and FIG. 2 can be produced through such steps. The method for producing a capacitive sensor sheet previously described is a method of laminating constituent members shown in the exploded perspective view of FIG. 2 upward from the lowest.

Further, for example, when a capacitive sensor sheet comprising a covering electrode layer on only one side as shown in FIG. 4 is produced, the steps of forming the bottom covering electrode layer and the bottom flexible layer only have to be deleted.

Further, in the above-mentioned production method, in order to enhance the adhesion between the electrode layer and the overcoat layer, the flexible layer or the dielectric layer, the surfaces of the overcoat layer, the flexible layer and the dielectric layer may be subjected to a pretreatment before forming electrode layers (electrode layer for measurement and covering electrode layer).

However, when using the application liquid for forming an electrode layer containing carbon nanotubes as an electroconductive material, since carbon nanotubes have extremely excellent adhesion to sheet-like products such as the dielectric layer, sufficient adhesion between the electrode layer and the sheet-like products such as the dielectric layer can be ensured without applying any pretreatment. The adhesion is assumed to be due to a van der Waals' force.

Further, when the dielectric layer, the flexible layer or the overcoat layer is laminated, a primer solution may be applied, in advance, to the surface of the layer to be laminated.

Examples of the primer solution include a solution of the elastomer composition (A) diluted with toluene.

The capacitive sensor sheet can also be produced, for example, by the following method.

Specifically, a capacitive sensor sheet may be produced, for example, by preparing the dielectric layer, the flexible layers (top flexible layer, bottom flexible layer) and the overcoat layers by the methods described above, then previously forming the top electrode layers and the bottom electrode layers on the surfaces of the dielectric layer, the top covering electrode layer on the surface of the top flexible layer and the bottom covering electrode layer on the surface of the bottom flexible layer, and laminating the dielectric layer provided with the top electrode layers and the bottom electrode layers, the top flexible layer provided with the top covering electrode layer, the bottom flexible layer provided with the bottom covering electrode layer, and the overcoat layers in a predetermined order.

Alternatively, a capacitive sensor sheet may be produced by preparing the dielectric layer, the flexible layers (top flexible layer, bottom flexible layer) and the overcoat layers by the methods described above, then previously forming the covering electrode layer (either the top covering electrode layer or the bottom covering electrode layer) on the surface of the overcoat layer, the top electrode layers on the surface of the top flexible layer and the bottom electrode layers on the surface of the bottom flexible layer, and then laminating the overcoat layer provided with the top covering electrode layer or the bottom covering electrode layer, the flexible layer provided with the top electrode layers or the bottom electrode layers, and the dielectric layer in a predetermined order.

That is, when the capacitive sensor sheet is produced, each electrode layer (top electrode layers, bottom electrode layers, top covering electrode layer or bottom covering electrode layer) may be formed, in advance, on any of the dielectric layer, the flexible layer and the overcoat layer which are each in contact with the electrode layer, and these layers provided with the electrode layer formed thereon may be laminated in a predetermined order.

Also, the capacitive sensor sheet may be produced by a method of laminating raw material compositions in the form of a sheet in turn by using a general-purpose film forming apparatus or a film forming method such as various coating apparatuses, bar coating and doctor blade coating in place of the method of laminating, in a predetermined order, the sheet-like products prepared in advance.

EXAMPLES

Hereinafter, the present invention will be described in more detail by way of Examples, but the present invention is not limited to the following examples.

Preparation of Dielectric Layer

100 parts by mass of liquid hydrogenated hydroxyl group-terminated polyolefin polyol (EPOL, produced by Idemitsu Kosan Co., Ltd.) and 100 parts by mass of a high temperature lubricating oil (MORESCO-HILUBE LB-100, produced by MORESCO Corporation) predominantly composed of alkyl-substituted diphenyl ether were weighed, and stirred/mixed at a rotational speed of 2000 rpm for 3 minutes by using a planetary centrifugal mixer (manufactured by THINKY CORPORATION). Next, to the resulting mixture, 0.07 parts by mass of a catalyst (Fomrez Catalyst UL-28, manufactured by Momentive Performance Materials Inc.) were added, and the resulting mixture was stirred for 1.5 minutes with a planetary centrifugal mixer.

Thereafter, 11 parts by mass of isophorone diisocyanate (Desmodur I, produced by Sumika Bayer Urethane Co., Ltd.) were added, and the resulting mixture was stirred for 3 minutes with a planetary centrifugal mixer, defoamed for 1.5 minutes to form a raw material composition for a dielectric layer, and then the raw material composition was injected into the forming apparatus 30 shown in FIG. 6, and cross-linked/cured under conditions of a temperature of 110 °C and a retention time of 30 minutes in a furnace while being carried in a state of being sandwiched between protection films to obtain a rolled sheet with protection films, which has a predetermined thickness.

Thereafter, the obtained sheet was cross-linked for 12 hours in a furnace adjusted to 80 °C and cut to prepare a dielectric layer including an elastomer composition containing an olefin-based urethane elastomer and having a size of 150 mm × 150 mm × 50 μm in thickness.

The elongation at break (%) and the relative permittivity of the prepared dielectric layer were measured, and consequently the elongation at break (%) was 218 %, and the relative permittivity was 2.9.

Herein, the elongation at break was measured according to JIS K 6251.

A sheet-shaped measurement sample (dielectric layer) was sandwiched between electrodes of 20 mm in diameter, and its capacitance was measured at a measurement frequency of 1 kHz using an LCR HiTESTER (3522-50, manufactured by Hioki E.E. Corporation), and the relative permittivity was calculated from an electrode area and a thickness of the measurement sample.

Preparation of Electrode Layer Material

(1) Single-Walled Carbon Nanotube Dispersion

To 24.95 g of methyl isobutyl ketone, 50 mg of Super-Growth CNT (median value of fiber diameters: about 3 nm, growth length: 500 to 700 μm, aspect ratio: about 100 000, carbon purity: 99.9 %, provided by National Institute of Advanced Industrial Science and Technology) was added as single-walled carbon nanotubes, the resulting mixture was subjected to wet-dispersion treatment by using a jet mill (Nano Jet Pal JN10-SP003, manufactured by Jokoh Co., Ltd.), and 25 g of methyl isobutyl ketone was further added to obtain a single-walled carbon nanotubes dispersion of a concentration of 0.1 % by weight.

In addition, the term growth length of carbon nanotubes refers to a height of a forest growing on a growth substrate in preparing carbon nanotubes, and the growth length virtually corresponds to an average length of carbon nanotubes.

(2) Multi-Walled Carbon Nanotube Dispersion

To 24.95 g of methyl isobutyl ketone, 50 mg of NC 7000 (fiber diameter: 9.5 nm, average length: 1.5 μm, aspect ratio: 158, carbon purity: 90 %) manufactured by Nanocyl S.A. was added as multi-walled carbon nanotubes, the resulting mixture was subjected to wet-dispersion treatment by using a jet mill (Nano Jet Pal JN10-SP003, manufactured by Jokoh Co., Ltd.), and 25 g of methyl isobutyl ketone was further added to obtain a multi-walled carbon nanotubes dispersion of a concentration of 0.1 % by weight.

(3) <u>Mixed Dispersion of Carbon Nanotubes</u>

The single-walled carbon nanotubes dispersion and the multi-walled carbon nanotubes dispersion were mixed at a ratio of 30 : 70 (weight ratio) to form a carbon nanotubes application liquid composed of a mixture of the single-walled carbon nanotubes and the multi-walled carbon nanotubes.

<u>Preparation of Flexible Layer</u>

Using the same method as in the above-mentioned preparation of a dielectric layer, a top flexible layer and a bottom flexible layer were prepared which include an elastomer composition containing an olefin-based urethane elastomer and have a thickness of 50 $\mu$m.

<u>Preparation of Overcoat Layer</u>

Using the same method as in the above-mentioned preparation of a dielectric layer, an overcoat layer was prepared which includes an elastomer composition containing an olefin-based urethane elastomer and has a thickness of 50 $\mu$m.

<u>Preparation of Primer Solution</u>

A 0.1 % by weight toluene solution obtained by dissolving, in toluene, a composition having the same formulation as that of the raw material composition for a dielectric layer, was prepared and the toluene solution was used as a primer solution.

<u>Example 1</u>

Herein, by the following method, a capacitive sensor sheet was prepared, which was different in the number of rectangular electrodes in the top electrode layers and the bottom electrode layers from the capacitive sensor sheet shown in FIGS. 1A and 1B and FIG. 2, but had the same layer configuration as in the capacitive sensor sheet shown in FIGS. 1A and 1B and FIG. 2.

(1) The carbon nanotubes application liquid (electrode layer material) was applied onto the one surface of the overcoat layer with an air brush and dried to form a bottom covering electrode layer of 137 mm length, 137 mm wide and 1 $\mu$m thick. Thereafter, a copper foil was bonded to an end portion of one side of the bottom covering electrode layer to form a connecting portion for a covering electrode.
(2) Next, 8 g of the primer solution was applied onto the bottom covering electrode layer with an air brush and dried at 100 °C for 30 minutes. Thereafter, the bottom flexible layer was laminated, by use of a metallic hand roller, on the side of the formed bottom covering electrode layer of the overcoat layer provided with the bottom covering electrode layer. The bottom flexible layer was laminated so as to sandwich the bottom covering electrode layer between the overcoat layer and the bottom flexible layer.
(3) The carbon nanotubes application liquid (electrode layer material) was applied onto the surface of the bottom flexible layer with an air brush and dried to form a bottom electrode layers. The bottom electrode layers were rectangular electrode layers arranged in parallel to one another, and eight rectangular electrode layers having an average thickness of about 1 $\mu$m, a width of 10 mm and a length of 140 mm were formed at 5 mm intervals. Thereafter, a copper foil was bonded to an end portion of each rectangular electrode to form a bottom connecting portion.
(4) Next, 8 g of the primer solution was applied onto the bottom electrode layers with an air brush and dried at 100 °C for 30 minutes. Thereafter, the dielectric layer was laminated, by use of a metallic hand roller, on the side of the formed bottom electrode layer of the bottom flexible layer provided with the bottom electrode layers. The dielectric layer was laminated so as to sandwich the bottom electrode layers between the bottom flexible layer and the dielectric layer.
(5) The carbon nanotubes application liquid (electrode layer material) was applied onto the surface of the dielectric layer with an air brush and dried to form a top electrode layers. The top electrode layers were rectangular electrode layers which were orthogonal to the bottom electrode layers and were arranged in parallel to one another, and eight rectangular electrode layers having an average thickness of about 1 $\mu$m, a width of 10 mm and a length of 140 mm were formed at 5 mm intervals. Thereafter, a copper foil was bonded to an end portion of each rectangular electrode to form a top connecting portion.

(6) Next, 8 g of the primer solution was applied onto the top electrode layers with an air brush and dried at 100 °C for 30 minutes. Thereafter, the top flexible layer was laminated, by use of a metallic hand roller, on the side of the formed top electrode layer of the dielectric layer provided with the top electrode layers. The top flexible layer was laminated so as to sandwich the top electrode layers between the dielectric layer and the top flexible layer.

(7) The carbon nanotubes application liquid (electrode layer material) was applied onto the surface of the top flexible layer with an air brush and dried to form a top covering electrode layer of 137 mm long, 137 mm wide and 1 $\mu$m thick. Thereafter, a copper foil was bonded to an end portion of one side of the top covering electrode layer to form a connecting portion for a covering electrode.

(8) Next, 8 g of the primer solution was applied onto the top covering electrode layer with an air brush and dried at 100 °C for 30 minutes. Thereafter, the overcoat layer was laminated, by use of a metallic hand roller, on the side of the formed top covering electrode layer of the top flexible layer provided with the top covering electrode layer.

The overcoat layer was laminated so as to sandwich the top covering electrode layer between the top flexible layer and the overcoat layer, and thereby a capacitive sensor sheet having covering electrode layers (top covering electrode layer and bottom covering electrode layer) on both sides of the dielectric layer was completed.

Example 2

Here, a capacitive sensor sheet was prepared in the same manner as in Example 1 except for using the overcoat layer as a starting material and forming the covering electrode layer on only one side of the dielectric layer.

(1) The carbon nanotubes application liquid (electrode layer material) was applied onto the surface of the overcoat layer with an air brush and dried to form a bottom electrode layers. The bottom electrode layers were rectangular electrode layers arranged in parallel to one another, and eight rectangular electrode layers having an average thickness of about 1 $\mu$m, a width of 10 mm and a length of 140 mm were formed at 5 mm intervals. Thereafter, a copper foil was bonded to an end portion of each rectangular electrode to form a bottom connecting portion.

(2) Next, 8 g of the primer solution was applied onto the bottom electrode layers with an air brush and dried at 100 °C for 30 minutes. Thereafter, the dielectric layer was laminated, by use of a metallic hand roller, on the side of the formed bottom electrode layer of the overcoat layer provided with the bottom electrode layers. The dielectric layer was laminated so as to sandwich the bottom electrode layers between the overcoat layer and the dielectric layer.

(3) The carbon nanotubes application liquid (electrode layer material) was applied onto the surface of the dielectric layer with an air brush and dried to form a top electrode layers. The top electrode layers were rectangular electrode layers which were orthogonal to the bottom electrode layers and were arranged in parallel to one another, and eight rectangular electrode layers having an average thickness of about 1 $\mu$m, a width of 10 mm and a length of 140 mm were formed at 5 mm intervals. Thereafter, a copper foil was bonded to an end portion of each rectangular electrode to form a top connecting portion.

(4) Next, 8 g of the primer solution was applied onto the top electrode layers with an air brush and dried at 100 °C for 30 minutes. Thereafter, the top flexible layer was laminated, by use of a metallic hand roller, on the side of the formed top electrode layer of the dielectric layer provided with the top electrode layers. The top flexible layer was laminated so as to sandwich the top electrode layers between the dielectric layer and the top flexible layer.

(5) The carbon nanotubes application liquid (electrode layer material) was applied onto the surface of the top flexible layer with an air brush and dried to form a top covering electrode layer of 137 mm length, 137 mm wide and 1 $\mu$m thick. Thereafter, a copper foil was bonded to an end portion of one side of the top covering electrode layer to form a connecting portion for a covering electrode.

(6) Next, 8 g of the primer solution was applied onto the top covering electrode layer with an air brush and dried at 100 °C for 30 minutes. Thereafter, the overcoat layer was laminated, by use of a metallic hand roller, on the side of the formed top covering electrode layer of the top flexible layer provided with the top covering electrode layer. The overcoat layer was laminated so as to sandwich the top covering electrode layer between the top flexible layer and the overcoat layer. Thereby a capacitive sensor sheet having the covering electrode layer on only one side of the dielectric layer was completed.

Comparative Example 1

Here, a capacitive sensor sheet not having a covering electrode layer was prepared.

(1) The carbon nanotubes application liquid (electrode layer material) was applied onto the surface of the overcoat layer with an air brush and dried to form a bottom electrode layers. The bottom electrode layers were rectangular electrode layers arranged in parallel to one another, and eight rectangular electrode layers having an average thickness of about 1 μm, a width of 10 mm and a length of 140 mm were formed at 5 mm intervals. Thereafter, a copper foil was bonded to an end portion of each rectangular electrode to form a bottom connecting portion.

(2) Next, 8 g of the primer solution was applied onto the bottom electrode layers with an air brush and dried at 100 °C for 30 minutes. Thereafter, the dielectric layer was laminated, by use of a metallic hand roller, on the side of the formed bottom electrode layer of the overcoat layer provided with the bottom electrode layers. The dielectric layer was laminated so as to sandwich the bottom electrode layers between the overcoat layer and the dielectric layer.

(3) The carbon nanotubes application liquid (electrode layer material) was applied onto the surface of the dielectric layer with an air brush and dried to form a top electrode layers. The top electrode layers were rectangular electrode layers which were orthogonal to the bottom electrode layers and were arranged in parallel to one another, and eight rectangular electrode layers having an average thickness of about 1 μm, a width of 10 mm and a length of 140 mm were formed at 5 mm intervals. Thereafter, a copper foil was bonded to an end portion of each rectangular electrode to form a top connecting portion.

(4) Next, 8 g of the primer solution was applied onto the top electrode layers with an air brush and dried at 100 °C for 30 minutes. Thereafter, the overcoat layer was laminated, by use of a metallic hand roller, on the side of the formed top electrode layer of the dielectric layer provided with the top electrode layers. The overcoat layer was laminated so as to sandwich the top electrode layers between the dielectric layer and the overcoat layer. Thereby a capacitive sensor sheet was completed.

Evaluation 1: Influence of Presence or Absence of Covering Electrode Layer on Capacitance Measurement

With respect to each of capacitive sensor sheets prepared in Examples 1 and 2, and Comparative Example 1, four sides of the sensor sheet was fixed by a rigid frame, and each of the top connecting portions and the bottom connecting portions was connected to an LCR meter (manufactured by Hioki E.E. Corporation, LCR HiTESTER 3522-50) through an electrically-conductive lead, a terminal block and a DIP switch, and each of connecting portions for a covering electrode was connected to a GND terminal of the LCR meter through an electrically-conductive lead to form a capacitive sensor.

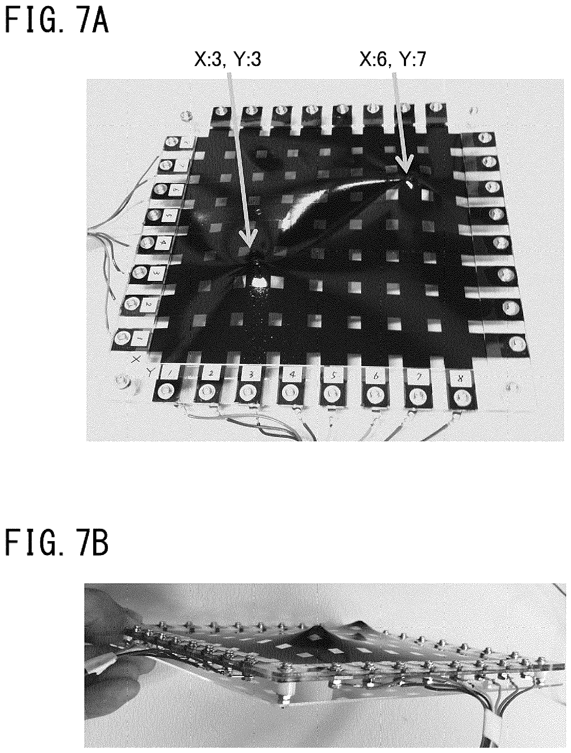

FIG. 7A shows a photograph of the capacitive sensor prepared by using the capacitive sensor sheet prepared in Comparative Example 1.

The capacitance of each detection portion in an initial state (undeformed state) of the capacitive sensor was measured. Measurement results were plotted as a three-dimensional graph.

Next, as shown in FIG. 7B, two locations of the sensor sheet were pushed with a glass rod having a spherical (10 mm in diameter) abutting portion made of a silicone resin at its tip from the underside to deform the sensor sheet. The capacitance of each detection portion in this state was measured. Measurement results were plotted as a three-dimensional graph. The sensor sheet was pushed in by 12.7 mm with the glass rod.

RESULTS

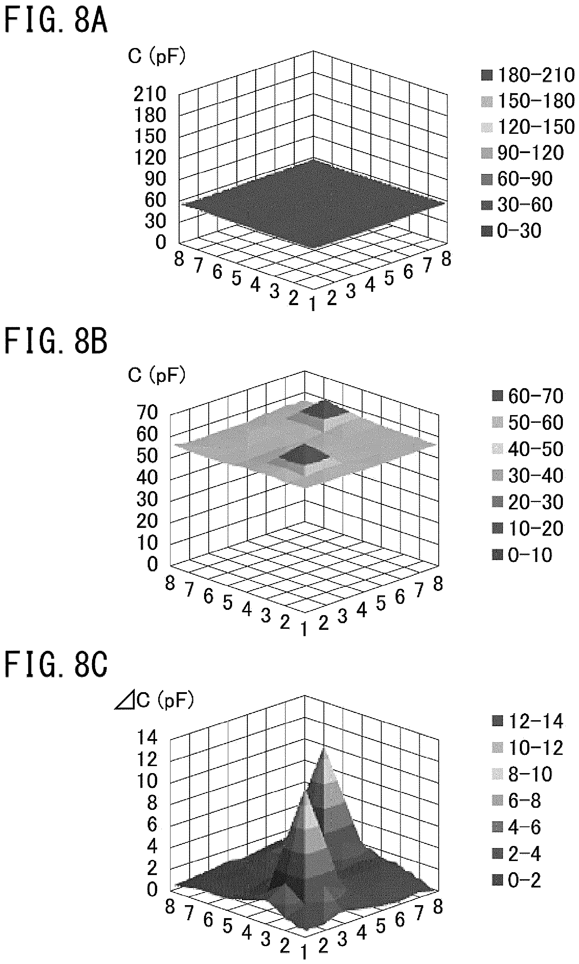

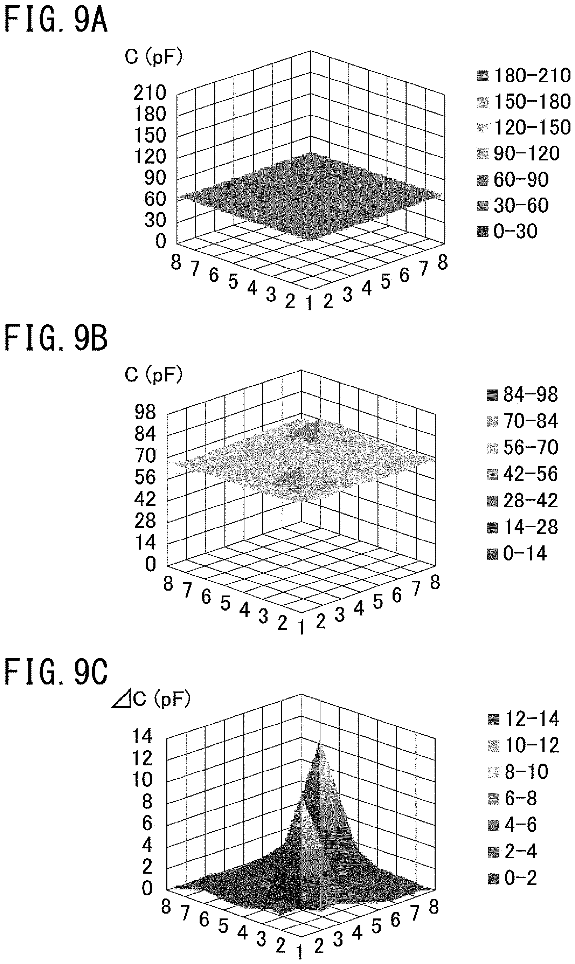

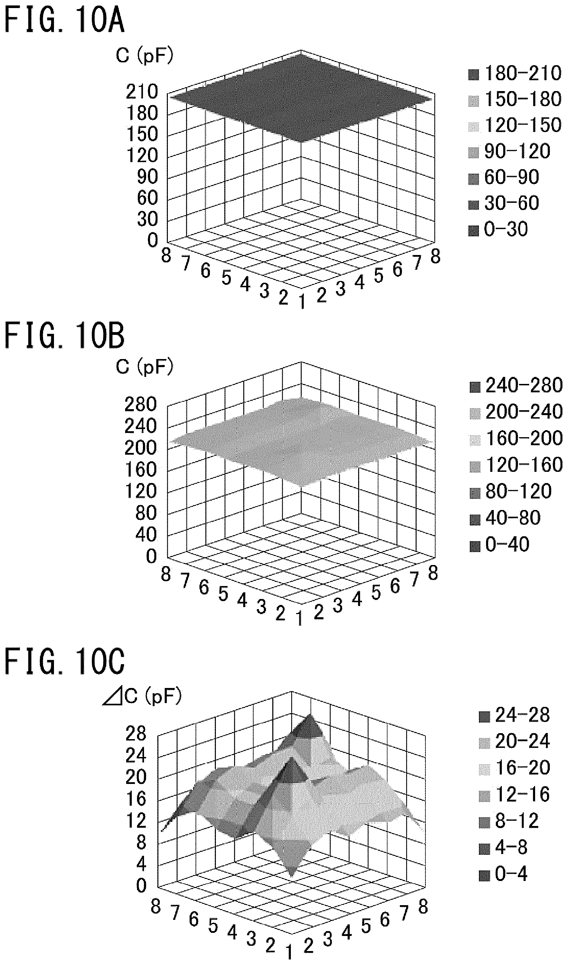

The evaluation results of the capacitive sensors prepared by using the capacitive sensor sheets of Example 1, Example 2 and Comparative Example 1 are shown as three-dimensional graphs in FIGS. 8A to 8C, FIGS. 9A to 9C and FIGS. 10A to 10C, respectively.

In each of FIGS. 8A to 10C, FIG. 8A, FIG. 9A and FIG. 10A show the capacitance of each detection portion in an initial state (undeformed state), FIG. 8B, FIG. 9B and FIG. 10B show the capacitance of each detection portion in deforming the sensor sheet, and FIG. 8C, FIG. 9C and FIG. 10C show an amount of change from the capacitance of each detection portion in an initial state to the capacitance of each detection portion in deforming the sensor sheet.

As is apparent from the results shown in FIG. 8A to FIG. 10C, it is evident that the increment of capacitance in the detection portion can be suppressed by disposing a covering electrode layer on one side or both sides of a dielectric layer. In particular, it is apparent that by forming the covering electrode layers on both sides of the dielectric layer, the capacitance of each detection portion in an initial state approximates to its theoretical value. In addition, a theoretical value of the capacitance of each detection portion in an initial state is 50 pF.

Further, it is evident that the detection sensitivity and detection accuracy are improved by forming the covering electrode layer. It is evident that in particular, by forming the covering electrode layers on both sides of the dielectric layer, the detection sensitivity and detection accuracy are more improved in comparison with the case of forming the covering electrode layer on only one side of the dielectric layer.

Evaluation 2: Influence of Presence or Absence of Connection to GND Terminal (Ground) on Capacitance Measurement

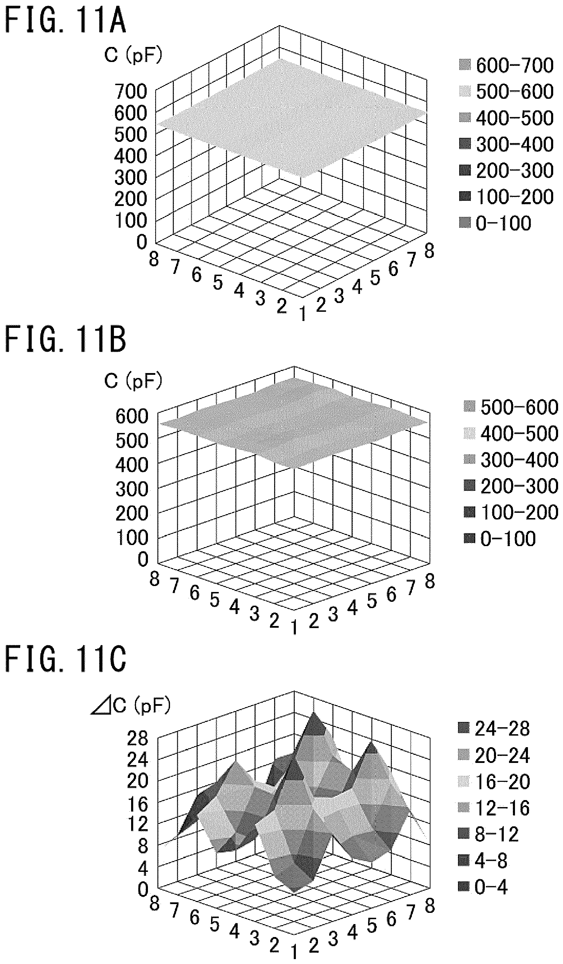

In the capacitive sensor used in Evaluation 1, which was formed by using the capacitive sensor sheet prepared in Example 1, the connecting portions for a covering electrode were not connected to the GND terminal, and in this state, the capacitance in an initial state and the capacitance of each detection portion in deformation were measured. In addition, deforming conditions of the sensor sheet were set to the same as in Evaluation 1. Measurement results were plotted as a three-dimensional graph and shown in FIGS. 11A to 11C.

Also in FIGS. 11A to 11C, FIG. 11A shows the capacitance of each detection portion in an initial state (undeformed state), FIG. 11B shows the capacitance of each detection portion in deforming the sensor sheet, and FIG. 11C shows an amount of change from the capacitance of each detection portion in an initial state to the capacitance of each detection portion in deforming the sensor sheet.

As is apparent from a comparison between the results shown in FIGS. 8A to 8C and FIGS. 11A to 11C, it is evident that the increment of capacitance can be suppressed from an initial state by grounding the covering electrode layer.

Also, it is apparent that the measurement accuracy is improved by grounding the covering electrode layer.

INDUSTRIAL APPLICABILITY

In the capacitive sensor sheet of the present invention, a change amount $\Delta C$ in capacitance can be detected from the capacitance C before being deformed by contact with a measuring object and the capacitance C after being deformed by contact with the measuring object to determine the amount of strain due to elastic deformation, the distribution of strain due to elastic deformation and the surface pressure distribution.

The capacitive sensor using the capacitive sensor sheet of the present invention can be used, for example, as a sensor for tracing a shape of a soft article or as a sensor for measuring the motion of the measuring object such as human beings. More specifically, the sensor can measure (detect), for example, deformation of an innersole against the bottom of the foot or deformation of a seat cushion against hips.

Further, the sensor is also suitable for detecting position information of a measuring object moving in contact with the sensor sheet.

Moreover, the sensor can also be used, for example, as an input interface for a touch panel.

In addition, the capacitive sensor of the present invention can also be used for measurement at a light-shielded site which cannot be measured by existing optical motion capture sensors.

LIST OF REFERENCE SIGNS

| | |
|---|---|
| 1 | CAPACITIVE SENSOR SHEET |
| 2 | DIELECTRIC LAYER |
| 3A | TOP FLEXIBLE LAYER |
| 3B | BOTTOM FLEXIBLE LAYER |
| 4A | TOP COVERING ELECTRODE LAYER |
| 4B | BOTTOM COVERING ELECTRODE LAYER |
| 5A | OVERCOAT LAYER |
| 5B | OVERCOAT LAYER |
| 01A1 to 16A1 | TOP CONNECTING PORTION |
| 01A to 16A, 01D to 16D | TOP ELECTRODE LAYER |
| 01B1 to 16B1 | BOTTOM CONNECTING PORTION |
| 01B to 16B, 01E to 16E | BOTTOM ELECTRODE LAYER |
| C0101 to C1616 | DETECTION PORTION |
| F0101 to F1616 | DETECTION PORTION |
| 01d to 16d | TOP CONDUCTING WIRE |
| 01e to 16e | BOTTOM CONDUCTING WIRE |
| 30 | FORMING APPARATUS |
| 101 | CAPACITIVE SENSOR |
| 102 | EXTERNAL CONDUCTING WIRE |
| 103 | EXTERNAL CONDUCTING WIRE |
| 104 | MEASUREMENT INSTRUMENT |
| 105 | GND LINE |
| 201 | CAPACITIVE SENSOR SHEET, |
| 301 | CAPACITIVE SENSOR SHEET |
| 302 | DIELECTRIC LAYER |

**Claims**

1. A capacitive sensor sheet (1, 201, 301) comprising:

    - a dielectric layer (2) comprising an elastomer composition A;
    - a top electrode layer (01A to 16A, 01D to 16D) laminated on the obverse surface of the dielectric layer (2); and
    - a bottom electrode layer (01B to 16B, 01E to 16E) laminated on the reverse surface of the dielectric layer (2),
    - wherein a portion at which the top electrode layer (01A to 16A, 01D to 16D) and the bottom electrode layer (01B to 16B, 01E to 16E) intersect as viewed in a thickness direction serves as a detection portion,
    - wherein the detection portion comprises a plurality of detection portions (C0101 to C1616, F0101 to F1616), the capacitive sensor sheet (1, 201, 301) further comprising at least one of: a top covering electrode layer (4A) formed over the top electrode layer (01A to 16A, 01D to 16D) so as to cover the detection portions (C0101 to C1616, F0101 to F1616) with a top flexible layer (3A) comprising an elastomer composition B1 interposed between the top electrode layer (01A to 16A, 01D to 16D) and the top covering electrode layer (4A); and a bottom covering electrode layer (4B) formed over the bottom electrode layer (01B to 16B, 01E to 16E) so as to cover the detection portions (C0101 to C1616, F0101 to F1616) with a bottom flexible layer (3B) comprising an elastomer composition B2 interposed between the bottom electrode layer (01B to 16B, 01E to 16E) and the bottom covering electrode layer (4B), wherein each of the top flexible layer (3A) and the bottom flexible layer (3B) has an average thickness of 1 $\mu$m to 200 $\mu$m, the capacitive sensor sheet (1, 201, 301) is adapted to be used for measuring changes in capacitance in the detection portions (C0101 to C1616, F0101 to F1616).

2. The capacitive sensor sheet (1, 201, 301) according to claim 1, wherein the top electrode layer (01A to 16A, 01D to 16D) and the bottom electrode layer (01B to 16B, 01E to 16E) comprise an electroconductive composition containing carbon nanotubes.

3. The capacitive sensor sheet (1, 201, 301) according to claim 2, wherein the carbon nanotubes are a mixture of single-walled carbon nanotubes and multi-walled carbon nanotubes.

4. The capacitive sensor sheet (1, 201, 301) according to any one of claims 1 to 3, wherein an elastomer in the elastomer composition A is a urethane elastomer.

5. The capacitive sensor sheet (1, 201, 301) according to any one of claims 1 to 4, wherein an elastomer in at least one of the elastomer composition B1 and the elastomer composition B2 is a urethane elastomer.

6. The capacitive sensor sheet (1, 201, 301) according to any one of claims 1 to 5, wherein an elongation rate which the capacitive sensor sheet (1, 201, 301) can endure in uniaxial tension is 30 % or more.

7. Use of the capacitive sensor sheet (1, 201, 301) according to any one of claims 1 to 6, for measurement of at least one of the following parameters of a measuring object:

    the amount of strain due to elastic deformation; the distribution of strain due to elastic deformation; and the surface pressure distribution.

8. A capacitive sensor (101) comprising:

    - a capacitive sensor sheet (1, 201, 301) according to any one of claims 1 to 7;
    - a measurement instrument (104); and
    - external conducting wires (102, 103) connecting each of the top electrode layer (01A to 16A, 01D to 16D) and the bottom electrode layer (01B to 16B, 01E to 16E) which are included in the capacitive sensor sheet (1, 201, 301) to the measurement instrument (104),
    - wherein the capacitive sensor (101) is adapted to measure at least one of the following parameters of a measuring object:

    the amount of strain due to elastic deformation; the distribution of strain due to elastic deformation; and the surface pressure distribution by measuring changes in capacitance in the detection portions (C0101 to C1616, F0101 to F1616) which are included in the capacitive sensor sheet (1, 201, 301).

**Patentansprüche**

1. Kapazitiver Sensorflächenkörper (1, 201, 301), der Folgendes aufweist:

   - eine dielektrische Schicht (2), die eine Elastomer-Zusammensetzung A aufweist;
   - eine obere Elektrodenschicht (01A bis 16A, 01D bis 16D), mit der die Vorderseite der dielektrischen Schicht (2) beschichtet ist; und
   - eine untere Elektrodenschicht (01B bis 16B, 01E bis 16E), mit der die Rückseite der dielektrischen Schicht (2) beschichtet ist,
   - wobei ein Bereich, in dem die obere Elektrodenschicht (01A bis 16A, 01D bis 16D) und die untere Elektrodenschicht (01B bis 16B, 01E bis 16E) sich von einer Dickenrichtung aus betrachtet kreuzen, als Detektionsbereich dient,
   - wobei der Detektionsbereich eine Vielzahl von Detektionsbereichen (C0101 bis C1616, F0101 bis F1616) aufweist,
   - wobei der kapazitive Sensorflächenkörper (1, 201, 301) ferner zumindest eines der folgenden Merkmale aufweist:
   - eine obere bedeckende Elektrodenschicht (4A), die so über der oberen Elektrodenschicht (01A bis 16A, 01D bis 16D) ausgebildet ist, dass die Detektionsbereiche (C0101 bis C1616, F0101 bis F1616) mit einer oberen flexiblen Schicht (3A) bedeckt sind, die eine Elastomer-Zusammensetzung B1 aufweist, die zwischen der oberen Elektrodenschicht (01A bis 16A, 01D bis 16D) und der oberen bedeckenden Elektrodenschicht (4A) angeordnet ist; und
   - eine untere bedeckende Elektrodenschicht (4B), die so über der unteren Elektrodenschicht (01B bis 16B, 01E bis 16E) ausgebildet ist, dass die Detektionsbereiche (C0101 bis C1616, F0101 bis F1616) mit einer unteren flexiblen Schicht (3B) bedeckt sind, die eine Elastomer-Zusammensetzung B2 aufweist, die zwischen der unteren Elektrodenschicht (01B bis 16B, 01E bis 16E) und der unteren bedeckenden Elektrodenschicht (4B) angeordnet ist,

   wobei jede von der oberen flexiblen Schicht (3A) und der unteren flexiblen Schicht (3B) eine durchschnittliche Dicke von 1 $\mu$m bis 200 $\mu$m aufweist und der kapazitive Sensorflächenkörper (1, 201, 301) dafür ausgelegt ist, für das Messen von Änderungen bei der Kapazität in den Detektionsbereichen (C0101 bis C1616, F0101 bis F1616) verwendet zu werden.

2. Kapazitiver Sensorflächenkörper (1, 201, 301) gemäß Anspruch 1,
   wobei die obere Elektrodenschicht (01A bis 16A, 01D bis 16D) und die untere Elektrodenschicht (01B bis 16B, 01E bis 16E) eine elektrisch leitfähige Zusammensetzung aufweisen, die Kohlenstoff-Nanoröhren enthält.

3. Kapazitiver Sensorflächenkörper (1, 201, 301) gemäß Anspruch 2,
   wobei die Kohlenstoff-Nanoröhren eine Mischung aus einwandigen Kohlenstoffnanoröhren und mehrwandigen Kohlenstoffnanoröhren sind.

4. Kapazitiver Sensorflächenkörper (1, 201, 301) gemäß einem der Ansprüche 1 bis 3, wobei ein Elastomer in der Elastomer-Zusammensetzung A ein Urethan-Elastomer ist.

5. Kapazitiver Sensorflächenkörper (1, 201, 301) gemäß einem der Ansprüche 1 bis 4, wobei ein Elastomer in der Elastomer-Zusammensetzung B1 und/oder der Elastomer-Zusammensetzung B2 ein Urethan-Elastomer ist.

6. Kapazitiver Sensorflächenkörper (1, 201, 301) gemäß einem der Ansprüche 1 bis 5, wobei die Dehnungsrate, der der kapazitive Sensorflächenkörper (1, 201, 301) bei einachsiger Zugkraft standhalten kann, 30 % oder mehr beträgt.

7. Verwendung des kapazitiven Sensorflächenkörpers (1, 201, 301) gemäß einem der Ansprüche 1 bis 6 zum Messen von zumindest einem der folgenden Parameter eines Messobjekts: dem Ausmaß der Beanspruchung aufgrund von elastischer Verformung; der Verteilung der Beanspruchung aufgrund von elastischer Verformung; und dem Oberflächendruck-Verteilung.

8. Kapazitiver Sensor (101), der Folgendes aufweist:

   - einen kapazitiven Sensorflächenkörper (1, 201, 301) gemäß einem der Ansprüche 1 bis 7;
   - ein Messinstrument (104); und

- externe leitende Drähte (102, 103), die sowohl die obere Elektrodenschicht (01A bis 16A, 01D bis 16D) als auch die untere Elektrodenschicht (01B bis 16B, 01E bis 16E), welche der kapazitive Sensorflächenkörper (1, 201, 301) aufweist, mit dem Messinstrument (104) verbinden,

- wobei der kapazitive Sensor (101) dafür ausgelegt ist, zumindest einen der folgenden Parameter eines Messobjekts durch das Messen von Änderungen der Kapazität in den Detektionsbereichen (C0101 bis C1616, F0101 bis F1616), welche der kapazitive Sensorflächenkörper (1, 201, 301) aufweist, zu messen: das Ausmaß der Beanspruchung aufgrund von elastischer Verformung; die Verteilung der Beanspruchung aufgrund von elastischer Verformung; und die Oberflächendruck-Verteilung.

## Revendications

1.  Feuille de détection capacitive (1, 201, 301) comprenant :

    - une couche diélectrique (2) comprenant une composition élastomère A ;
    - une couche électrode supérieure (01A à 16A, 01D à 16D) stratifiée sur la surface au recto de la couche diélectrique (2) ; et
    - une couche électrode inférieure (01B à 16B, 01E à 16E) stratifiée sur la surface au verso de la couche diélectrique (2),
    - dans laquelle une portion à laquelle la couche électrode supérieure (01A à 16A, 01D à 16D) et la couche électrode inférieure (01B à 16B, 01E à 16E) se recoupent, comme vu dans une direction de l'épaisseur, sert de portions de détection,
    - dans laquelle la portion de détection comprend une pluralité de portions de détection (C0101 à C1616, F0101 à F1616),

    la feuille de détection capacitive (1, 201, 301) comprenant en outre au moins une couche parmi :

    une couche électrode de couverture supérieure (4A) formée sur la couche électrode supérieure (01A à 16A, 01D à 16D) de manière à couvrir les portions de détection (C0101 à C1616, F0101 à F1616) avec une couche flexible supérieure (3A) comprenant une composition élastomère B1 interposée entre la couche électrode supérieure (01A à 16A, 01D à 16D) et la couche électrode de couverture supérieure (4A) ;
    et une couche électrode de couverture inférieure (4B) formée sur la couche électrode inférieure (01B à 16B, 01E à 16E) de manière à couvrir les portions de détection (C0101 à C1616, F0101 à F1616) avec une couche flexible inférieure (3B) comprenant une composition élastomère B2 interposée entre la couche électrode inférieure (01B à 16B, 01E à 16E) et la couche électrode de couverture inférieure (4B),
    dans laquelle chacune de la couche flexible supérieure (3A) et de la couche flexible inférieure (3B) a une épaisseur moyenne de 1 $\mu$m à 200 $\mu$m, la feuille de détection capacitive (1, 201, 301) est adaptée à être utilisée pour mesurer des changements de capacité dans les portions de détection (C0101 à C1616, F0101 à F1616).

2.  Feuille de détection capacitive (1, 201, 301) selon la revendication 1, dans laquelle la couche électrode supérieure (01A à 16A, 01D à 16D) et la couche électrode inférieure (01B à 16B, 01E à 16E) comprennent une composition électriquement conductrice contenant des nanotubes de carbone.

3.  Feuille de détection capacitive (1, 201, 301) selon la revendication 2, dans laquelle les nanotubes de carbone sont un mélange de nanotubes de carbone à simple paroi et de nanotubes de carbone à multiples parois.

4.  Feuille de détection capacitive (1, 201, 301) selon l'une quelconque des revendications 1 à 3, dans laquelle un élastomère dans la composition élastomère A est un élastomère uréthane.

5.  Feuille de détection capacitive (1, 201, 301) selon l'une quelconque des revendications 1 à 4, dans laquelle un élastomère dans l'une au moins de la composition élastomère B1 et de la composition élastomère B2 est un élastomère uréthane.

6.  Feuille de détection capacitive (1, 201, 301) selon l'une quelconque des revendications 1 à 5, dans laquelle un taux d'élongation que la feuille de détection capacitive (1, 201, 301) peut subir en tension uniaxiale est de 30 % ou plus.

7.  Utilisation de la feuille de détection capacitive (1, 201, 301) selon l'une quelconque des revendications 1 à 6 pour la mesure de l'un au moins des paramètres suivants d'un objet à mesurer :

intensité des contraintes dues à la déformation élastique ; distribution des contraintes dues à la déformation élastique ; et distribution de pression en surface.

8. Détecteur capacitif (101) comprenant :

- une feuille de détection capacitive (1, 201, 301) selon l'une quelconque des revendications 1 à 7 ;
- un instrument de mesure (104) ; et
- des fils conducteurs externes (102, 103) qui connectent chacune de la couche électrode supérieure (01A à 16A, 01D à 16D) et de la couche électrode inférieure (01B à 16B, 01E à 16E) qui sont incluses dans la feuille de détection capacitive (1, 201, 301) à l'instrument de mesure (104),
- dans laquelle le détecteur capacitif (101) est adapté pour mesurer l'un au moins des paramètres suivants d'un objet à mesurer :

intensité des contraintes dues à la déformation élastique ; distribution des contraintes dues à la déformation élastique ; et distribution de pression de surface, en mesurant des changements de capacité dans les portions de détection (C0101 à C1616, F0101 à F1616) qui sont incluses dans la feuille de détection capacitive (1, 201, 301).

# FIG. 1A

# FIG. 1B

Sectional View Taken on Line A-A

FIG. 2

# FIG. 3

# FIG. 4

# FIG. 5A

# FIG. 5B

Sectional View Taken on Line B–B

FIG. 6

## FIG. 7A

## FIG. 7B

## FIG. 8A

C (pF)

■ 180-210
■ 150-180
■ 120-150
■ 90-120
■ 60-90
■ 30-60
■ 0-30

## FIG. 8B

C (pF)

■ 60-70
■ 50-60
■ 40-50
■ 30-40
■ 20-30
■ 10-20
■ 0-10

## FIG. 8C

△C (pF)

■ 12-14
■ 10-12
■ 8-10
■ 6-8
■ 4-6
■ 2-4
■ 0-2

## FIG. 9A

C (pF)

- 180–210
- 150–180
- 120–150
- 90–120
- 60–90
- 30–60
- 0–30

## FIG. 9B

C (pF)

- 84–98
- 70–84
- 56–70
- 42–56
- 28–42
- 14–28
- 0–14

## FIG. 9C

$\triangle$C (pF)

- 12–14
- 10–12
- 8–10
- 6–8
- 4–6
- 2–4
- 0–2

# FIG. 10A

# FIG. 10B

# FIG. 10C

FIG. 11A

FIG. 11B

FIG. 11C

## REFERENCES CITED IN THE DESCRIPTION

**Patent documents cited in the description**

- JP 2010043881 A

- US 20120241689 A1